# EUROPEAN PATENT SPECIFICATION

(11) **EP 4 204 290 B1**
(45) Date of publication and mention of the grant of the patent: **03.09.2025**
(21) Application number: 22755063.9
(22) Date of filing: 21.07.2022
(51) Int. Cl.: B62K 11/00

(54) **PERSONAL MOBILITY VEHICLE**
FAHRZEUG FÜR PERSÖNLICHE MOBILITÄT
VÉHICULE DE MOBILITÉ PERSONNELLE

(30) Priority: 21.07.2021 US 202163224014 P
(43) Date of publication of application: 05.07.2023
(73) Proprietor: Intelligent Motion Limited, Kowloon, Hong Kong (HK)
(72) Inventor: OOI, Hoe Seng, Maidstone Kent ME15 6LZ (GB); TAM, Ka Lun Alan, Hong Kong (CN)
(74) Representative: Modiano, Gabriella Diana
(86) International application number: PCT/CN2022/107051
(87) International publication number: WO 2023/001238

(56) References cited:
- EP-A1- 2 409 905
- EP-A1- 3 994 371
- WO-A1-2012/047127
- WO-A1-2019/103695
- WO-A1-2020/066960
- WO-A2-2012/011767
- CN-B- 109 455 255
- CN-U- 204 349 719
- CN-U- 205 239 781
- CN-U- 205 891 087
- JP-A- 2020 058 087
- US-A- 2 415 056
- US-A- 5 314 034
- US-A1- 2004 238 242
- US-A1- 2005 206 250
- US-A1- 2011 231 060
- US-A1- 2012 217 072
- US-A1- 2013 270 018
- US-A1- 2016 031 515
- US-A1- 2020 207 225
- ZHMUD V ET AL: "Advantages and Problems of Developing Unmanned One-Wheel Balancing Robots", 2019 INTERNATIONAL MULTI-CONFERENCE ON INDUSTRIAL ENGINEERING AND MODERN TECHNOLOGIES (FAREASTCON), IEEE, 1 October 2019 (2019-10-01), pages 1 - 7, XP033674687, DOI: 10.1109/FAREASTCON.2019.8934870
- LIU JIAMING: "Autonomous Driving Segway Robots A thesis submitted in partial fulfillment of the requirements for the degree of Master of Science in Engineering (Electrical Engineering) in the University of Michigan-Dearborn 2021 Master's Thesis Committee: Professor Weidong Xiang, Chair Associate Professor Sridhar", 1 May 2021 (2021-05-01), pages 1 - 104, XP093026967, Retrieved from the Internet <URL:https://deepblue.lib.umich.edu/bitstream/handle/2027.42/167349/Jiaming%20Liu%20-%20Final%20Thesis.pdf?sequence=1&isAllowed=y> [retrieved on 20230224]
- GUNEY MEHMET ALI ET AL: "A robotic experimental platform for testing and validating warehouse automation algorithms", 2013 IEEE CONFERENCE ON TECHNOLOGIES FOR PRACTICAL ROBOT APPLICATIONS (TEPRA), 1 May 2015 (2015-05-01), pages 1 - 6, XP093026966, ISSN: 2325-0526, ISBN: 978-1-4673-6223-8, Retrieved from the Internet <URL:https://ieeexplore.ieee.org/stampPDF/getPDF.jsp?tp=&arnumber=7219693&ref=aHR0cHM6Ly9pZWVleHBsb3JlLmllZWUub3JnL2Fic3RyYWN0L2RvY3VtZW50LzcyMTk2OTM=> DOI: 10.1109/TePRA.2015.7219693

## Description

### CROSS-REFERENCE TO RELATED APPLICATIONS

### FIELD OF THE INVENTION

The present invention generally relates to a personal mobility vehicle for transporting a passenger or goods, and particularly relates to a single-wheeled vehicle having a small physical footprint and powered by green energy with automated driving and self-balancing functions.

### BACKGROUND OF THE INVENTION

The automotive industry is evolving at a radical pace to shape the future mobility ecosystem. The use of personal mobility vehicles has gained increasing attention and popularity as an alternative way for travelling around a city conveniently. Unlike the common means of transportation such as the automobiles and other public transports, each personal mobility vehicle carries fewer or only one person. The vehicle may be powered by electricity or other renewable energy. In some cases, the concepts of sharing economy and autonomous driving are also integrated to change the model centered on the personal ownership of a car fundamentally.

The common vehicles and methods for transporting passengers or goods in equivalent volumetric capacity are known to occupy a large physical footprint due to the structure of the vehicle. Currently, vehicles are designed to have a minimum of two wheels with mechanical structure and a sizable amount of space for mounting various vehicle functional units to provide physically manual handling of the vehicles and driving functionalities, such as steering, acceleration, braking, etc. These vehicles do not use the available space on the road effectively as they occupy a large footprint during use or parking. In many cases, the carrying capacity of the vehicle is not fully utilized, leading to a waste of road space and substantially worsening the road traffic, especially during rush hours.

Examples in the prior art of compact personal mobility vehicles with small physical footprints include those disclosed in US Patent No. 8,807,250 B2 issued to Chen for Inventist Inc. (the '250 patent), and US Patent No. 10,525,326 B2 issued by Ma for Koofy Innovation Ltd. (the '326 patent).

In the electric powered self-balancing unicycle disclosed in the '250 patent, the unicycle is to be used while standing, which has the advantages of being compact and convenient to carry around. Various structures are provided for supporting the wheel and keeping the unicycle in place as it spins, absorbing small vertical movements, and driving the wheel at sufficient speed to maintain fore-and-aft balance. For the self-balancing vehicle with a single wheel as provided in the '326 patent, the vehicle has a shape substantially the same as a skateboard. The vehicle is balanced by the shift in the center of mass of the rider. However, the personal mobility vehicles provided in these two inventions are not trivial to use. It is necessary to learn how to balance and how to use the body weight to assist in the overall self-balancing. Therefore, the vehicle may not be suitable for all users, and autonomous driving is not a possible variation or an additional feature.

Accordingly, there is a need in the art for a personal mobility vehicle with a small physical footprint that can transport a passenger or goods. The vehicle supports multiple modes of use, operates easily, and uses sustainable energy. Furthermore, other desirable features and characteristics will become apparent from the subsequent detailed description and the appended claims, taken in conjunction with the accompanying drawings and this background of the disclosure. The prior art document CN 205 891 087 U discloses a personal mobility vehicle in accordance with the preamble of claim 1.

### SUMMARY OF THE INVENTION

Provided herein is a personal mobility vehicle for transporting a passenger or goods. It is an objective of the present disclosure to provide a compact vehicle for minimizing the physical footprint. Preferably, the personal mobility vehicle is a single-wheel vehicle with self-balancing and a wheel having a cooling system, battery, and motor integrated therein.

In accordance with the first aspect of the present disclosure, a personal mobility vehicle is provided. The personal mobility vehicle includes a vehicle body; and a wheel arrangement having a single wheel assembly with an in-wheel motor rotatable about an axis of rotation, wherein the single wheel assembly defines a vertical plane aligned with a travel direction of the personal mobility vehicle, and wherein the vertical plane is perpendicular to the axis of rotation. The in-wheel motor is a traction motor comprising a stator and a rotor in magnetic interaction with each other, wherein the rotor is mounted circumferentially outside the stator and is rotatable about the axis of rotation by a magnetic field; a wheel rim connected to and fitted to the rotor and having an outer circumferential rim wall for installing a tyre, wherein an opening is provided at an inner peripheral side of the wheel rim for accommodating the stator and the rotor; and a rotatable air guide structure mounted between the wheel rim and the rotor, which is arranged circumferentially around the stator to rotate with the rotor about the axis of rotation for generating air circulation within the traction motor to evenly dissipate heat energy from the stator.

In accordance with a further embodiment of the present disclosure, the stator comprises a plurality of electro-magnets for generating a magnetic field, and wherein the rotor comprises a rotor lamination and two groups of permanent magnets alternatingly attached to slots of the rotor lamination, wherein the two groups of permanent magnets are magnetized to different polarities.

According to the invention, the rotatable air guide structure is a cooling structure comprising a ring body and a plurality of vanes protruded from an inner circumferential surface of the ring body, wherein the vane extends radially from a first edge of the ring body towards a second edge of the ring body.

In accordance with a further embodiment of the present disclosure, the plurality of vanes are integrally formed as parts of the ring body, and the rotatable air guide structure is mounted to the wheel rim and the rotor by welding, bolting, or the like.

In accordance with a further embodiment of the present disclosure, the personal mobility vehicle further includes an electric energy system having a plurality of power pack modules integrated into the single wheel assembly, and wherein the power pack module holds one or more battery cells.

In accordance with a further embodiment of the present disclosure, the power pack module comprises a battery management system for controlling charging and discharging of the one or more battery cells.

In accordance with a further embodiment of the present disclosure, the one or more battery cells are selected from a group consisting of a lithium-ion battery cell, a hydrogen fuel cell, a nickel-metal hydride battery, a lead-acid battery, an ultracapacitor, or any combinations thereof.

In accordance with a further embodiment of the present disclosure, the traction motor further comprises a left wheel stator and a right wheel stator, which collectively provides an airtight enclosure for the traction motor, and interfaces with the plurality of power pack modules.

In accordance with a further embodiment of the present disclosure, the left wheel stator and the right wheel stator are used to clamp the single wheel assembly to the vehicle body, and wherein the vehicle body is coupled to a stirrup-style steering linkage extended from the left wheel stator and the right wheel stator.

In accordance with a further embodiment of the present disclosure, the wheel assembly comprises a brake-by-wire system configured to effect braking operations through an electronic control.

In accordance with a further embodiment of the present disclosure, the personal mobility has a high degree of maneuverability. the personal mobility vehicle further includes an active suspension system adjustable to change the personal mobility vehicle between a highly maneuverable state and a travelling state; and a steering system. The vehicle body comprises a seat assembly for carrying a passenger or goods, wherein the seat assembly defines a longitudinal axis extending from a rear end to a front end of the seat assembly. The wheel assembly is positioned under the seat assembly via the active suspension system and the steering system. The wheel arrangement is operable to perform a forward or a backward movement. The steering system is configured to rotate the wheel arrangement by a steering angle from the longitudinal axis, and the active suspension system is configured to adjust a rake angle between the wheel arrangement and the seat assembly. In the highly maneuverable state, the rake angle is adjusted to 0 degrees for enabling the personal mobility vehicle to perform a self-rotation or a sideways movement. In the travelling state, the rake angle is adjusted to a positive value for enabling the personal mobility vehicle to move forward or backward and to make turns.

In accordance with a further embodiment of the present disclosure, the active suspension system comprises a pair of suspension cylinders, wherein the pair of suspension cylinders are actuated to adjust the rake angle of the wheel arrangement and absorb shocks and vibrations.

In accordance with a further embodiment of the present disclosure, the pair of suspension cylinders are spaced laterally and equally on two sides of the steering system and are connected to a bottom side of the seat assembly.

In accordance with a further embodiment of the present disclosure, the steering system comprises a steering actuator for generating a steering torque on the wheel arrangement to rotate the wheel arrangement by the steering angle.

In accordance with a further embodiment of the present disclosure, the steering actuator is connected to the wheel arrangement via a stirrup-style steering linkage to rotate the wheel rim by the steering angle.

In accordance with a further embodiment of the present disclosure, the rake angle is in a range between 5 degrees and 45 degrees in the travelling state.

In accordance with a further embodiment of the present disclosure, the steering system is a steer-by-wire steering system.

In accordance with a further embodiment of the present disclosure, the personal mobility vehicle is moveable with the sideways movement after adjusting the rake angle to 0 degrees and rotating the steering angle to 90 degrees.

In accordance with a further embodiment of the present disclosure, the personal mobility vehicle further includes one or more auxiliary wheels for providing movement stability even for an uneven terrain.

In accordance with a further embodiment of the present disclosure, the personal mobility vehicle further includes two control handlebars and one or more digital displays for manual steering control of the personal mobility vehicle.

In accordance with the second aspect of the present disclosure, and that is a not claimed aspect, a personal mobility vehicle for transporting a passenger or goods is provided. The personal mobility vehicle includes a seat assembly for carrying the passenger or the goods; a wheel arrangement comprising a single wheel assembly positioned under the seat assembly via a steering linkage, wherein the wheel arrangement comprises an electric propulsion system that enables the wheel arrangement to propel the personal mobility vehicle to perform a forward or a backward movement; and a vehicle stabilization mechanism for counter-balancing a tilting movement of the personal mobility vehicle, the vehicle stabilization mechanism comprising a plurality of self-balancing units mounted outside the single wheel assembly and distributed around the vehicle body for generating gyroscopic forces. The electric propulsion system comprises an electric motor accommodated within the single wheel assembly and configured to drive the single wheel assembly to perform the forward or the backward movement. The plurality of self-balancing units are configured to balance the personal mobility vehicle based on an angular momentum of the seat assembly.

In accordance with a further not claimed embodiment of the present disclosure, the vehicle stabilization mechanism includes a plurality of gyro sensors and a plurality of triaxial accelerometers, which are arranged collectively to sense a tilting angle and a tilting velocity of the seat assembly; and one or more seat sensors configured to sense the weight and the sitting position of the passenger, the tilting angle, and the tilting velocity.

In accordance with a further not claimed embodiment of the present disclosure, the plurality of self-balancing units comprises three flywheel assemblies respectively arranged on two sides of the seat assembly, and on a rear side of the seat assembly.

In accordance with a further not claimed embodiment of the present disclosure, the seat assembly comprises a base frame, a foldable rear frame, and two foldable side frames. The foldable rear frame and the two foldable side frames are pivotably attached to the base frame. The foldable rear frame and the two foldable side frames are rotated to upright positions to switch the personal mobility vehicle to a sitting mode. The foldable rear frame is rotated rearwardly to provide a driver seat, and the two foldable side frames are rotated inwardly towards each other, thereby the personal mobility vehicle is switched to a driving mode.

In accordance with the not claimed third aspect of the present disclosure, a personal mobility vehicle is provided. The personal mobility vehicle includes a seat assembly for carrying a passenger or goods; a wheel arrangement comprising a single wheel assembly positioned under the seat assembly, wherein the wheel arrangement comprises an electric propulsion system that enables the wheel arrangement to propel the personal mobility vehicle to perform a forward or a backward movement; an active suspension system; a steering system; and a vehicle automated driving mechanism. The vehicle automated driving mechanism includes an autonomous system electronic control unit configured to execute sensing, sensor data fusion, perception, mapping, localization and path planning algorithms and output vehicle motion commands; and a vehicle control system electronic control unit configured to couple the vehicle motion commands to the electric propulsion system, a steer-by-wire system, a brake-by-wire system, and active suspension systems.

In accordance with a further not claimed embodiment of the present disclosure, the vehicle automated driving mechanism comprises a communication system configured to communicate with another personal mobility vehicle or other communication equipment using one or more communication protocols selected from Bluetooth, Wireless Body Area Network (WBAN), Ethernet, and other communication protocols.

In accordance with a further not claimed embodiment of the present disclosure, the vehicle automated driving mechanism comprises a plurality of LiDAR sensors configured to perform object detection, wherein the plurality of LiDAR sensors are configured to generate a 3D point cloud map of points indicating locations of reflective features in an environment.

In accordance with a further not claimed embodiment of the present disclosure, the vehicle automated driving mechanism comprises vision sensors configured to perform exploration of nearby ground structures and low-lying obstacles and perform object detection, recognition, and tracking.

In accordance with a further not claimed embodiment of the present disclosure, the vehicle automated driving mechanism comprises one or more radar sensors configured to perform long-range or short-range detection of objects by transmitting and receiving radar signals, and one or more ultrasonic sensors configured to perform short-range detection based on portions of the ultrasonic waves that are reflected from the objects.

In accordance with a further not claimed embodiment of the present disclosure, the personal mobility vehicle further includes an inertia measurement unit sensor operating in combination with a GPS sensor for localization at different update rate to optimize performance accuracy.

In accordance with a further not claimed embodiment of the present disclosure, the personal mobility vehicle further includes a parcel carrier mounted on the seat assembly for carrying goods in an automated driving mode, wherein the parcel carrier is mounted to the seat assembly using a bolt or other fasteners, and a parcel LiDAR sensor is mounted on the parcel carrier.

In accordance with the not claimed fourth aspect of the present disclosure, a travelling cluster formed by a plurality of personal mobility vehicles travelling together is disclosed. Each of the plurality of personal mobility vehicles includes a seat assembly for carrying a passenger or goods; a wheel arrangement comprising a single wheel assembly positioned under the seat assembly, wherein the single wheel assembly comprises an electric propulsion system that enables the single wheel assembly to propel the personal mobility vehicle to perform a forward movement or a backward movement; and a vehicle stabilization mechanism for counter-balancing a tilting movement of the personal mobility vehicle, the vehicle stabilization mechanism comprising a plurality of self-balancing units mounted on the seat assembly for generating gyroscopic forces. The plurality of personal mobility vehicles are in close proximity and connected wirelessly. The plurality of personal mobility vehicles are configured to maintain the speed, longitudinal and lateral distances in relative to each other.

In accordance with a further not claimed embodiment of the present disclosure, a first personal mobility vehicle of the plurality of personal mobility vehicles is a lead vehicle, and the other personal mobility vehicles of the plurality of personal mobility vehicles are connected to the first personal mobility vehicle to move in synchronization autonomously.

In accordance with a further not claimed embodiment of the present disclosure, the other personal mobility vehicles comprise a parcel carrier for transporting goods in an automated driving mode, and wherein the parcel carrier is mounted to the seat assembly using a bolt or other fasteners, and a parcel LiDAR sensor is mounted on the parcel carrier.

In accordance with a further not claimed embodiment of the present disclosure, each of the plurality of personal mobility vehicles further comprises a vehicle automated driving mechanism, wherein the vehicle automated driving mechanism comprising: an autonomous system electronic control unit configured to execute sensing, sensor data fusion, perception, mapping, localization and path planning algorithms and output vehicle motion commands; and a vehicle control system configured to couple the vehicle motion commands to the electric propulsion system, a steer-by-wire system, a brake-by-wire system and active suspension systems, and wheel sensors.

### BRIEF DESCRIPTION OF THE DRAWINGS

The appended drawings contain figures to further illustrate and clarify the above and other aspects, advantages, and features of the present disclosure. It will be appreciated that these drawings depict only certain embodiments of the present disclosure and are not intended to limit its scope. It will also be appreciated that these drawings are illustrated for simplicity and clarity and have not necessarily been depicted to scale. The present disclosure will now be described and explained with additional specificity and detail through the use of the accompanying drawings in which:
FIG. **1** depicts a front perspective view of the personal mobility vehicle in the sitting mode, in accordance with one or more embodiments of the present disclosure;
FIG. **2** depicts a rear perspective view of the personal mobility vehicle in the sitting mode, in accordance with one or more embodiments of the present disclosure;
FIG. **3** depicts a front perspective view of the personal mobility vehicle with a passenger in the sitting mode, in accordance with one or more embodiments of the present disclosure;
FIG. **4** depicts a rear perspective view of the personal mobility vehicle with a passenger in the sitting mode, in accordance with one or more embodiments of the present disclosure;
FIG. **5** depicts a front perspective view of the personal mobility vehicle in the driving mode, in accordance with one or more embodiments of the present disclosure;
FIG. **6** depicts a rear perspective view of the personal mobility vehicle in the driving mode, in accordance with one or more embodiments of the present disclosure;
FIG. **7** depicts a front perspective view of the personal mobility vehicle with a passenger in the driving mode, in accordance with one or more embodiments of the present disclosure;
FIG. **8** depicts a rear perspective view of the personal mobility vehicle with a passenger in the driving mode, in accordance with one or more embodiments of the present disclosure;
FIG. **9** depicts a front perspective view of the personal mobility vehicle for carrying goods, in accordance with one or more embodiments of the present disclosure;
FIG. **10** depicts a rear perspective view of the personal mobility vehicle for carrying goods, in accordance with one or more embodiments of the present disclosure;
FIGS. **11A-11B** depict side views of the single wheel assembly and the active suspension system for adjusting the rake angle, in accordance with one or more embodiments of the present disclosure;
FIGS. **12A-12B** depict front perspective views FIGS. **11A-11B****.**
FIG. **13A** depicts front perspective views of the single wheel assembly showing the steering of the single wheel assembly in the travelling state, in accordance with one or more embodiments of the present disclosure;
FIG. **13B** depicts front perspective views of the single wheel assembly showing the steering of the single wheel assembly in the highly maneuverable state, in accordance with one or more embodiments of the present disclosure;
FIGS. **14A-14B** depict front perspective view and front view of the personal mobility device configured to move with a sideways movement by rotating the steering angle to 90 degrees in the highly maneuverable state, in accordance with one or more embodiments of the present disclosure;
FIG. **15** depicts a front perspective view of the personal mobility vehicle showing the plurality of sensors, in accordance with one or more embodiments of the present disclosure;
FIG. **16** depicts a rear perspective view of the personal mobility vehicle showing the plurality of sensors, in accordance with one or more embodiments of the present disclosure;
FIG. **17** depicts an internal view of the front flywheel assembly, in accordance with one or more embodiments of the present disclosure;
FIG. **18** depicts an internal view of the rear flywheel assembly, in accordance with one or more embodiments of the present disclosure;
FIG. **19** depicts a front perspective view of the single wheel assembly, in accordance with one or more embodiments of the present disclosure;
FIG. **20** depicts an internal view of the single wheel assembly showing the traction motor, in accordance with one or more embodiments of the present disclosure;
FIG. **21** depicts a front view of the wheel arrangement with the wheel rim hidden to show the traction motor, in accordance with one or more embodiments of the present disclosure;
FIG. **22** depicts a cross-sectional view of the single wheel assembly, in accordance with one or more embodiments of the present disclosure;
FIG. **23** depicts an exploded view of the single wheel assembly, in accordance with one or more embodiments of the present disclosure;
FIG. **24** depicts a front perspective view of the traction motor with the motor shaft hidden, in accordance with one or more embodiments of the present disclosure;
FIG. **25** depicts a back perspective view of the traction motor with the motor shaft hidden, in accordance with one or more embodiments of the present disclosure;
FIG. **26** depicts three personal mobility vehicles of FIG. 1 travelling together as a travelling cluster;
FIG. **27** depicts an example of the operation of the plurality of sensors in the personal mobility vehicle of FIG. **1** for detecting short to long range objects;
FIG. **28** depicts a comparison of the footprint and the maneuverability between a wheelchair and the personal mobility vehicle of FIG. **1****;**
FIG. **29** depicts the advantages of the personal mobility vehicle of FIG. **1** when travelling on an escalator, making self-rotation, and stationing for interacting with people;
FIG. **30** depicts the vehicle system architecture of the personal mobility vehicle of FIG. **1****;**
FIG. **31** depicts the vehicle stabilization mechanism of the personal mobility vehicle of FIG. **1****;** and
FIG. **32** depicts the vehicle automated driving mechanism of the personal mobility vehicle of FIG. **1****.**

### DETAILED DESCRIPTION OF THE INVENTION

The following detailed description is merely exemplary in nature and is not intended to limit the disclosure or its application and/or uses. It should be appreciated that a vast number of variations exist. The detailed description will enable those of ordinary skilled in the art to implement an exemplary embodiment of the present disclosure without undue experimentation, and it is understood that various changes or modifications may be made in the function and structure described in the exemplary embodiment without departing from the scope of the present disclosure as set forth in the appended claims.

The benefits, advantages, solutions to problems, and any element(s) that may cause any benefit, advantage, or solution to occur or become more pronounced are not to be construed as a critical, required, or essential features or elements of any or all of the claims. The invention is defined solely by the appended claims including any amendments made during the pendency of this application and all equivalents of those claims as issued.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The terms "comprising," "having," and "including" or any other variatiori thereof, are to be construed as open-ended terms (i.e., meaning "including, but not limited to,") unless otherwise noted. The use of any and all examples, or exemplary language (e.g., "such as") provided herein, is intended merely to illuminate the invention better and does not pose a limitation on the scope of the invention unless otherwise claimed. No language in the specification should be construed as indicating any non-claimed element as essential to the practice of the invention. Further, unless expressly stated to the contrary, "or" refers to an inclusive "or" and not to an exclusive "or". For example, a condition A or B is satisfied by any one of the following: A is true (or present) and B is false (or not present), A is false (or not present) and B is true (or present), and both A and B are true (or present).

Terms such as "upper", "lower", "inner", "outer", "front", "rear", "top", "bottom", and variations thereof are used herein for ease of description to explain the positioning of an element, or the positioning of one element relative to another element, and are not intended to be limiting to a specific orientation or position. In addition, terms such as "left" and "right" are used with respect to the passenger of the personal mobility vehicle.

Terms of approximation, such as "about", "generally", "approximately", and "substantially" include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Unless otherwise defined, all terms (including technical and scientific terms) used in the embodiments of the present invention have the same meaning as commonly understood by an ordinary skilled person in the art to which the present invention belongs.

The described personal mobility vehicle can have any suitable components or characteristics that allow the personal mobility vehicle to function as a vehicle for carrying one single passenger or goods (such as a parcel box). In one preferred embodiment, the personal mobility vehicle includes a single wheel assembly having a traction motor integrated. In other alternative embodiments, the personal mobility vehicle can have any suitable design that allows the vehicle to be compact with a small physical footprint. Indeed, in certain alternative embodiments (not shown), the vehicle may include one or more auxiliary wheels to support the balancing of the personal mobility vehicle, and provide movement stability even for an uneven terrain. For example, but without limitation, one or more auxiliary wheels may be provided at the rear side of the personal mobility vehicle or provided on both the left and the right sides of the personal mobility vehicle. In such cases, one or more auxiliary wheels may be used to perform the self-balancing function without or with fewer flywheel assemblies.

The described personal mobility vehicle can have any suitable components or characteristics that generate driving force to power the personal mobility vehicle in motion. In one preferred embodiment, the personal mobility vehicle is powered by one or more batteries. In other alternative embodiments, the personal mobility vehicle can have any suitable design that power the vehicle, such as by internal combustion, or a combination thereof (hybrid system).

The present disclosure relates to a structure of a personal mobility vehicle, which is generally designated as **1000.** More specifically, but without limitation, the present disclosure provides a single-wheeled vehicle having a small physical footprint and powered by green energy with automated driving and self-balancing functions. One having ordinary skill in the art would understand that the current disclosure is also applicable to various vehicles and personal mobility vehicles with or without a passenger, for instance, but without limitation, cars, motorcycles, scooters, electric bicycles, passenger vehicles, trucks, electric wheelchairs, go-carts, amusement cars, military vehicles, water bikes, unmanned vehicles, and equivalents.

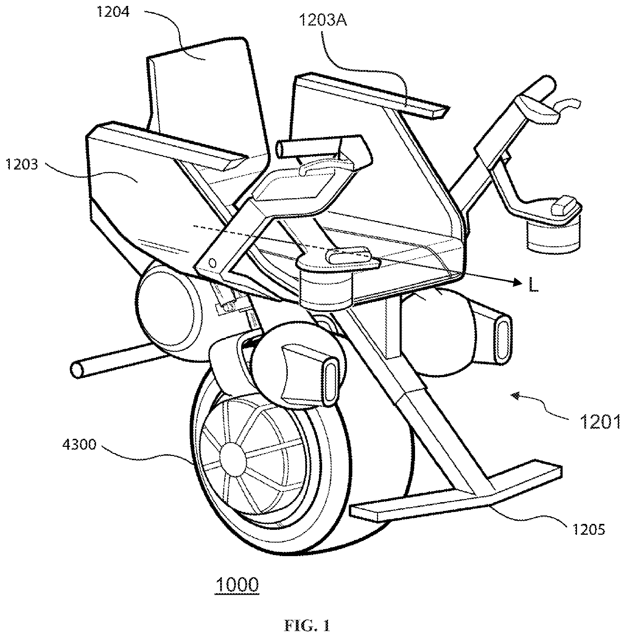

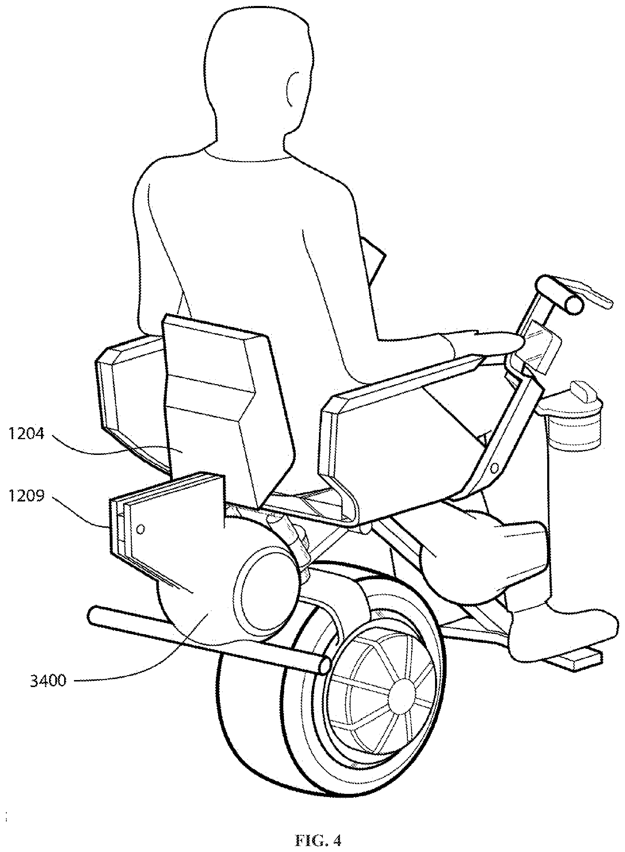

With reference to the first embodiment of the present disclosure as shown in FIGS. **1-4****,** the personal mobility vehicle **1000** is an electrical-powered personal mobility vehicle for carrying one user, or generally referred to as a "passenger". The passenger **1100** may or may not be a driver.

The first configuration of the personal mobility vehicle **1000** is arranged for carrying a passenger who is not a driver. The passenger can seat in a manner similar to that in a conventional car. The present disclosure is inspired by the need for a compact vehicle with a small physical footprint that can transport a passenger or goods, thereby the waste of road space can be minimized.

The personal mobility vehicle **1000** comprises a vehicle body **1201** and a wheel arrangement having a single wheel assembly **4300.** The illustrated embodiments describe the minimum components for enabling the personal mobility vehicle **1000** of the present disclosure. For example, but without limiting, the personal mobility vehicle **1000** may include an upper frame for enclosing a space for the passenger in the vehicle body **1201.**

The vehicle body **1201** includes a seat assembly **1202** comprising at least a base frame **1202A,** a foldable rear frame **1204,** and two foldable side frames **1203** provided on the sideways of the base frame **1202A.** The vehicle body **1201** further includes a control assembly **1210** with two handles **1217, 1218,** which may be fixedly connected or pivotably connected to the seat assembly **1202** at a position conveniently accessible by the passenger **1100** for controlling or monitoring the personal mobility vehicle **1000.** In certain embodiments, the control assembly **1210** comprises one or more digital displays **1211, 1212,** two control handlebars **1213, 1214,** and two brake levers **1215, 1216.** The one or more digital displays **1211, 1212** may be touch-screen panels for receiving user control and inputs. Below the seat assembly **1202,** a front footrest **1205** is provided for supporting the passenger **1100.** The front footrest **1205** may be slidable relative to the seat assembly **1202** to extend the length to fit passengers **1100** of different heights. One or more headlights **1208** are provided at the front end of the seat assembly. Similarly, one or more tail lights **1209** are provided at the rear end of the seat assembly.

The seat assembly **1202** defines a longitudinal axis **L** extending from a rear end to a front end of the seat assembly. The upper end of the foldable side frame **1203** may include an armrest **1203A.** The lower end of the foldable side frame **1203** is pivotably attached to the base frame **1202A** with at least a rotatable joint or a hinge. Similarly, the foldable rear frame **1204** is also pivotably attached to the base frame **1202A** with at least a rotatable joint or a hinge. The foldable rear frame **1204** and the two foldable side frames **1203** are both rotatable with respect to the base frame **1202A** to switch between a sitting mode and a driving mode.

In the sitting mode, the seat assembly **1202** is configured for carrying a passenger or goods. The two foldable side frames **1203** are rotated to an upright position, which is approximately perpendicular to the base frame **1202A,** thereby the foldable side frames **1203** are deployed as armrests for the passenger **1100.** The foldable rear frame **1204** is rotated to upright position, which is approximately perpendicular to the base frame **1202A,** thereby the foldable rear frame **1204** is deployed as a backrest for the passenger **1100.**

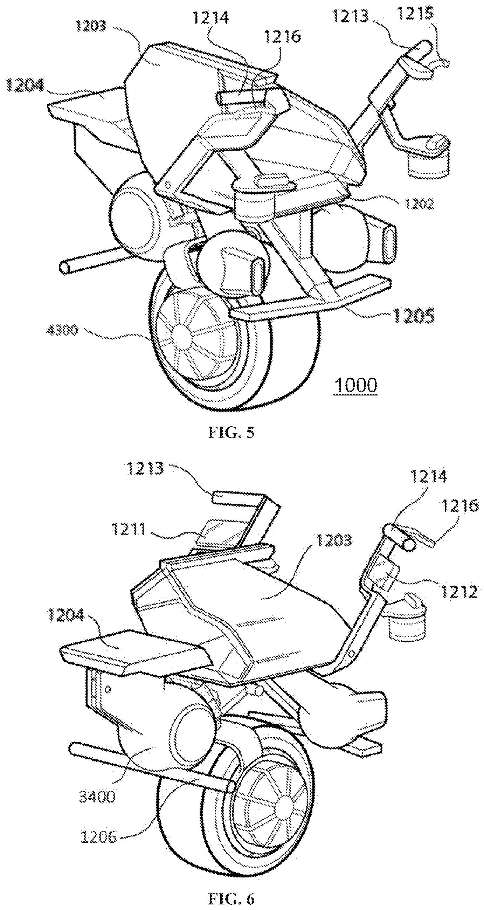

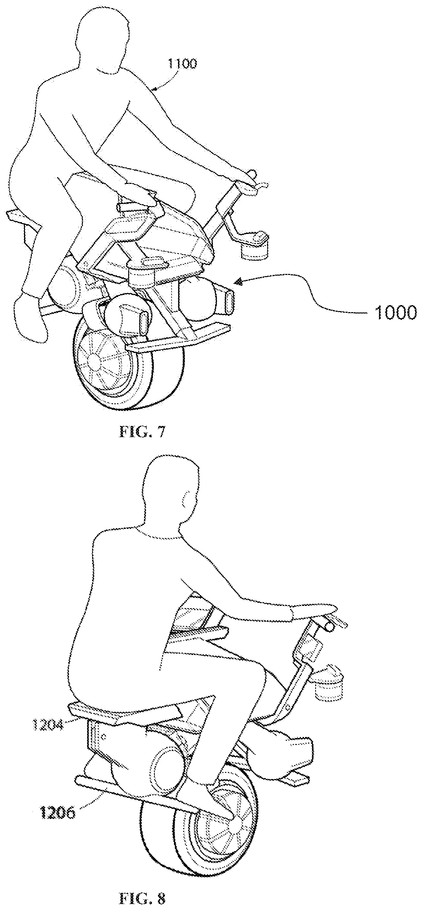

The second configuration of the personal mobility vehicle **1000** is arranged for carrying a passenger who is a driver. As illustrated in FIGS. **5-8****,** the seat assembly **1202** is configured for a passenger **1100** (or referred to as "rider") to perform manual control of the personal mobility vehicle **1000** in the driving mode. The foldable rear frame **1204** is rotated rearwardly until the foldable rear frame **1204** becomes generally horizontal or even parallel to the base frame **1202A,** which essentially provides a driver seat for the rider to sit on. The two foldable side frames **1203** are rotated inwardly, until the two armrests abut each other. When the rider sits on the foldable rear frame **1204,** the rider can slightly lean forward to hold the two control handlebars **1213, 1214** conveniently. In the driving mode, the personal mobility vehicle **1000** operates similar to a motorcycle but with one single wheel. The balancing of the personal mobility vehicle **1000** is realized using a vehicle stabilization mechanism. The one or more digital displays **1211, 1212** and the two control handlebars **1213, 1214** are operated by the rider for manual steering control of the personal mobility vehicle **1000.** A rear footrest **1206** is provided for supporting the passenger **1100.**

The vehicle stabilization mechanism is provided to counter-balancing a tilting movement of the personal mobility vehicle **1000** for preventing tipping. As explained above, the personal mobility vehicle **1000** is a single-wheeled mobility vehicle featuring a wheel arrangement having a single wheel assembly **4300.** Analogous to a unicycle, balancing is a critical element to enable the personal mobility vehicle **1000** to operate normally. By using the vehicle stabilization mechanism to balance the tilting momentum on the single wheel assembly **4300,** the personal mobility vehicle **1000** has the stability similar to a conventional motorcycle.

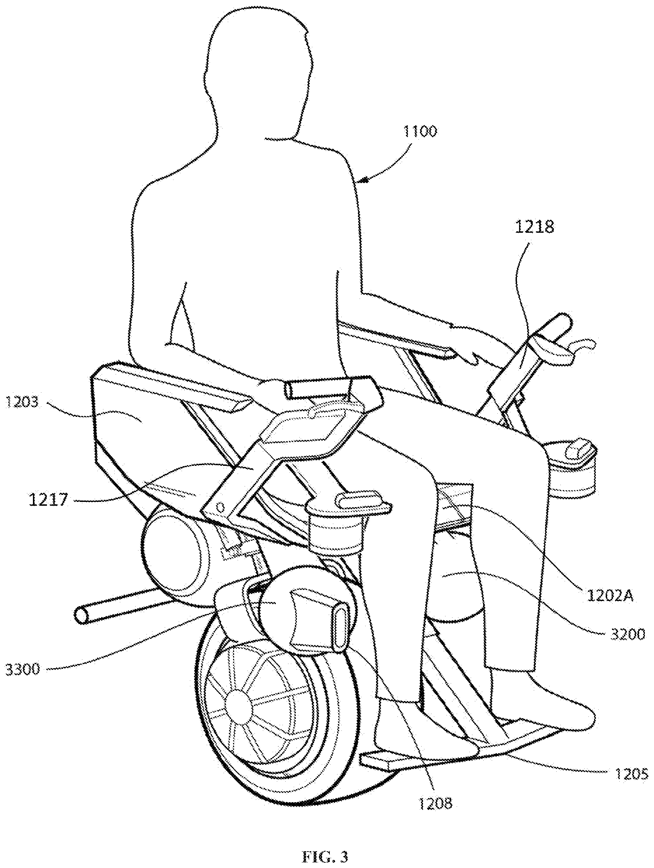

In certain embodiments, the vehicle stabilization mechanism comprises a plurality of self-balancing units mounted outside the wheel assembly **4300** for generating gyroscopic forces, which are configured to balance the personal mobility vehicle **1000** based on an angular momentum of the seat assembly **1202.** In a preferred embodiment shown in FIGS. 3-4, the plurality of self-balancing units comprises three flywheel assemblies distributed around the vehicle body **1201** which are generally designated as **3200, 3300,** and **3400.** The first and second front flywheel assemblies **3200, 3300** are positioned symmetrically on opposite sides to each other near the front end of the seat assembly **1202.** Preferably, the first front flywheel assembly **3200** is positioned on the left side of the seat assembly **1202** and the second front flywheel assembly **3300** is positioned on the right side of the seat assembly **1202.** The rear flywheel assembly **3400** has a larger diameter and is positioned along a centerline of the seat assembly **1202** at the rear side. Therefore, the three flywheel assemblies are disposed at positions corresponding to three corners of an isosceles triangle.

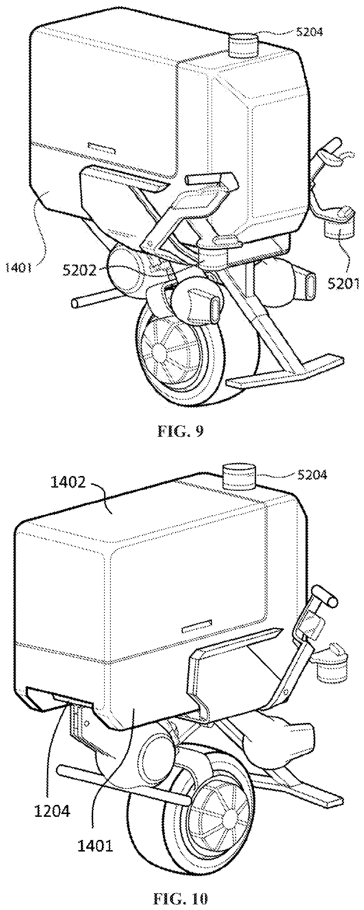

The third configuration of the personal mobility vehicle **1000** is arranged for carrying goods or parcels. As illustrated in FIGS. **9-10****,** the personal mobility vehicle **1000** comprises a parcel carrier **1401** for transporting goods or parcels in an automated driving mode. The parcel carrier **1401 is** preferably has a box-like body with a cover **1402** for opening and closing the parcel carrier **1401.** The foldable rear frame **1204** is rotated rearwardly until the foldable rear frame **1204** becomes generally horizontal or even parallel to the base frame **1202A** for expanding the storage space. The two foldable side frames **1203** are rotated to an upright position to restrict lateral movement of the parcel carrier **1401.** The parcel carrier **1401** is mounted on the seat assembly **1202** using a bolt or other fasteners. Preferably, on the top side of the parcel carrier **1401,** a parcel LiDAR sensor **5204** is mounted for object detection. The parcel LiDAR sensor **5204** operates with other LiDAR sensors, ultrasonic sensors, and vision sensors to perform short-range to long-range object detections. The present disclosure recognizes the need and advantages of having a parcel LiDAR sensor **5204** on top of the parcel carrier **1401** to achieve better detection accuracy.

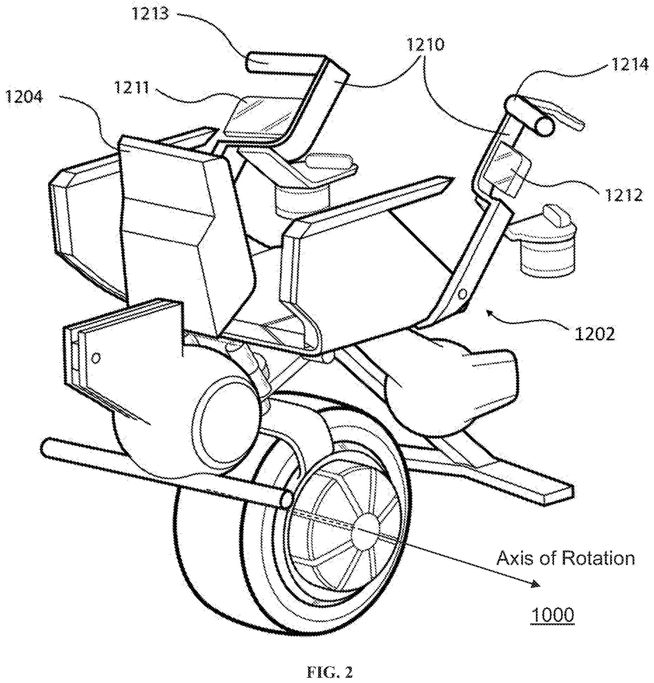

In the foregoing three configurations, the personal mobility vehicle **1000** includes a wheel arrangement having a single wheel assembly **4300** with an in-wheel motor rotatable about an axis of rotation. The axis of rotation is shown in FIG. **2****,** which is substantially perpendicular to the longitudinal axis **L** when the personal mobility vehicle **1000** is moving forward or backward along a travel direction without any change of steering direction. The single wheel assembly **4300** defines a vertical plane aligned with the travel direction of the personal mobility vehicle **1000.** The single wheel assembly **4300** is positioned under the seat assembly **1202** via a steering linkage. Preferably, the in-wheel motor is an electric motor accommodated within the single wheel assembly **4300** and configured to drive the single wheel assembly **4300** to perform the forward and backward movement.

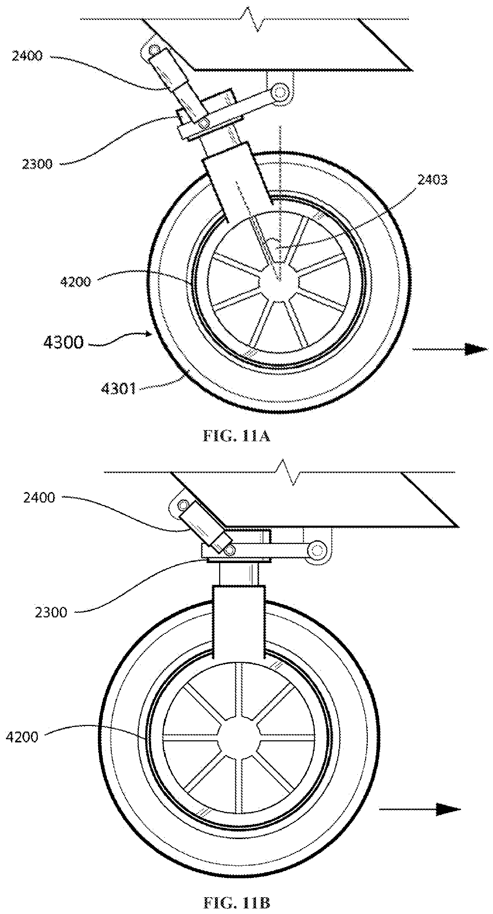

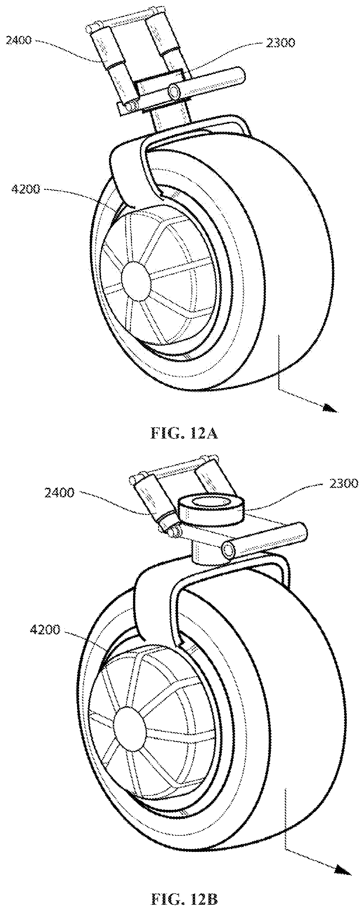

Turning now to FIGS. **11A-11B** and **12A-12B,** the wheel arrangement further includes an electric propulsion system **4200** that enables the wheel arrangement to propel the personal mobility vehicle **1000** to perform a forward or a backward movement. The electric propulsion system **4200** is integrated within the single wheel assembly **4300** to drive the single wheel assembly **4300** to rotate, wherein the single wheel assembly **4300** has a tyre **4301** mounted on it. In a preferred embodiment, the electric propulsion system **4200** is an in-wheel electric motor features an all-in-one design for minimizing the overall size of the personal mobility vehicle **1000.** The control and powerpack are enclosed inside the single wheel assembly **4300.** This is different from a conventional belt-drive motor which requires a powerpack installed outside the motor assembly, which inevitably results in a configuration having a large and bulky driving module.

The personal mobility vehicle **1000** can include an active suspension system **2400** and a steering system **2300** connecting the wheel arrangement to the vehicle body **1201.** The active suspension system **2400** and the steering system **2300** are the steering linkage connecting the wheel arrangement and the seat assembly **1202** for allowing the personal mobility vehicle **1000** to move with a high degree of maneuverability. In certain embodiments, the steering system **2300** is configured to rotate and steer the wheel arrangement. The active suspension system **2400 is** adjustable to change the personal mobility vehicle **1000** between a highly maneuverable state and a travelling state. In particular, the active suspension system **2400** is configured to adjust a rake angle **2403** between the wheel arrangement and the seat assembly **1202.** The rake angle **2403** is defined as the angle of inclination of the single wheel assembly **4300** from the vertical axis normal to the ground. The wheel assembly **4300** may rotate on the axis of rotation with a non-zero rake angle **2403,** which is similar to the front wheel of a typical two-wheeled motorcycle. The vehicle stabilization mechanism can keep the personal mobility vehicle **1000** from tipping and acts as a rear wheel of the typical two-wheeled motorcycle.

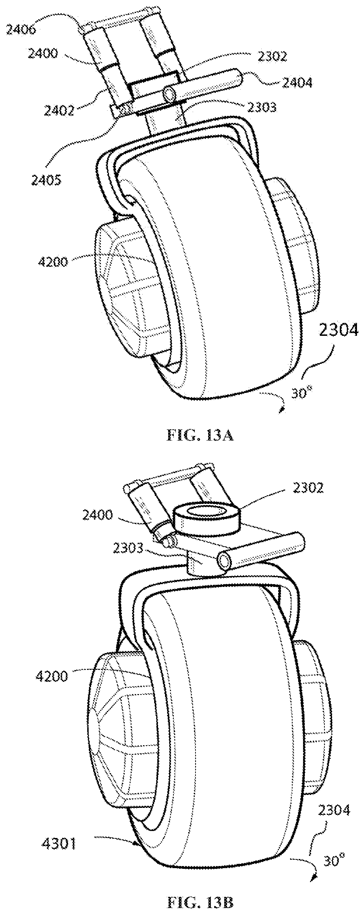

FIGS. **13A-13B** illustrate the steering of the single wheel assembly **4300** in the travelling state and the highly maneuverable state. The active suspension system **2400** comprises a pair of suspension cylinders **2402** each having a piston movable between an extended position and a retracted position along the length of the suspension cylinder **2402,** wherein the pair of suspension cylinders **2402** are actuated to adjust the rake angle **2403** of the wheel arrangement and absorb shocks and vibrations. The pair of suspension cylinders **2402** are spaced laterally and equally on two sides of the steering system **2300** and are connected to a bottom side of the seat assembly **1202.** In order to maintain the seat assembly **1202** at the same horizontal level when the rake angle **2403** is changed, a number of joints (e.g.: **2404, 2405, 2406)** are provided to adjustably connect the active suspension system **2400** to the vehicle body **1201.** The steering system **2300** is configured to rotate the wheel arrangement by a steering angle **2304** from the longitudinal axis **L.** Various configurations of the steering system **2300** may be implemented. In certain embodiments, the steering system **2300** is a steer-by-wire steering system. The illustrated embodiments provide a steering actuator **2302** for generating a steering torque on the wheel arrangement to rotate the wheel arrangement by the steering angle **2304.** The steering actuator **2302** is connected to the wheel arrangement via a stirrup-style steering linkage **2303** to rotate the wheel arrangement by the steering angle **2304.**

In the travelling state, as shown in FIGS. **12A** and **13A****,** the rake angle **2403** is adjusted to a positive value larger than 0 degrees for enabling the personal mobility vehicle **1000** to move forward or backward and to make turns. Depending on the road surface condition and the speed of the personal mobility vehicle **1000,** the rake angle **2403** is in a range between 5 degrees and 45 degrees in order to achieve a smooth movement in the travelling state. When the speed is high, the rake angle **2403** is increased to a range of 20 degrees and 45 degrees to allow smooth steering and increase stability. Particularly, the preferred rake angle **2403** for the travelling state is around 22.5 degrees. When the speed is low, the rake angle **2403** is decreased to a range of 5 degrees to 20 degrees. In certain embodiments, the rake angle **2403** may be adjustable automatically based on the travelling speed, or otherwise manually by the passenger **1100.**

In the highly maneuverable state, as shown in FIGS. **12B** and **13B****,** the rake angle **2403** is adjusted to 0 degrees or substantially close to 0 degrees for enabling the personal mobility vehicle **1000** to perform a self-rotation or a sideways movement. In other conventional personal mobility vehicles with more than one wheel, it is not possible to make self-rotation at a fixed spot, or change to sideways movement. For a unicycle or an electrical unicycle, only a professional rider may be able to make a self-rotation. This limitation is now overcome by controlling the active suspension system **2400** to change the rake angle to 0 degrees and by controlling the steering system **2300** to turn the single wheel assembly **4300,** in which even a first-time user of the personal mobility vehicle **1000** may be able to perform self-rotation and sideways movement.

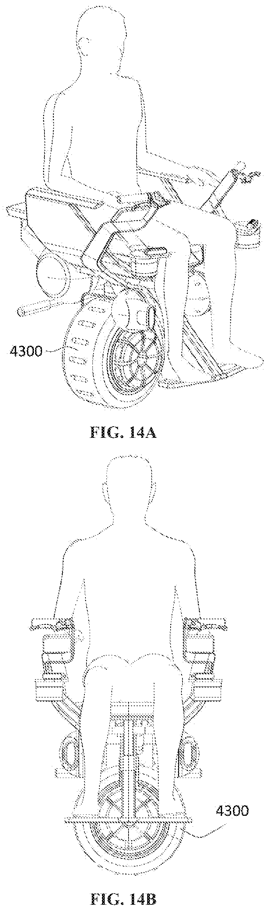

Referring to FIGS. **14A** and **14B****,** the personal mobility device **1000** is configured to move with a sideways movement by first changing to the highly maneuverable state, with a rake angle **2403** of 0 degrees, then the steering angle **2304** is rotated to 90 degrees to enable the personal mobility device **1000** to move towards the two sideways. The sideways movement may not necessarily be operated with the sitting mode. In certain embodiments, the personal mobility device **1000** can also perform a sideways movement in the driving mode.

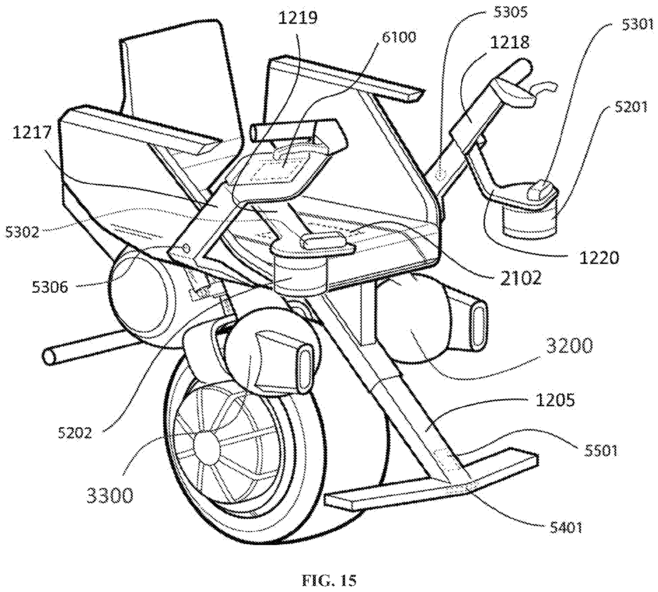

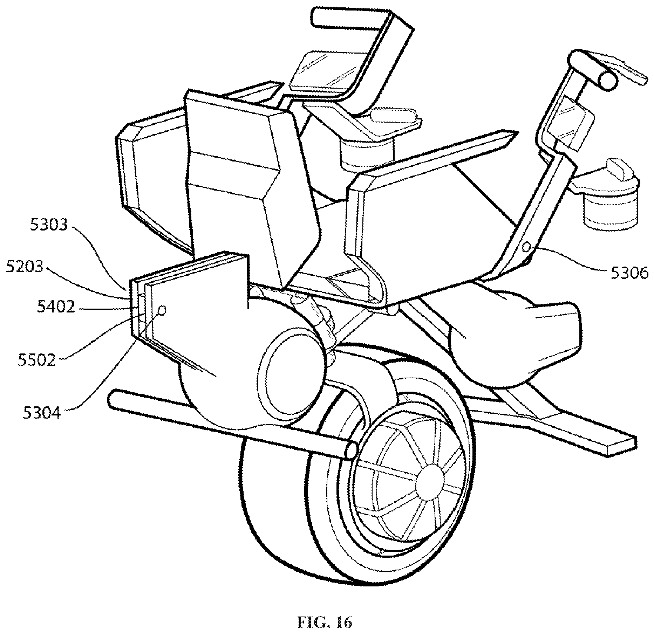

Referring to FIGS. **15-16****,** the personal mobility vehicle **1000** includes a plurality of sensors configured for monitoring the operation and condition of the personal mobility vehicle **1000,** and performing vehicle navigation and exploration of nearby ground structures and low-lying obstacles. The plurality of sensors include a plurality of gyro sensors, a plurality of triaxial accelerometers, one or more seat sensors, laser sensors, vision sensors, radar sensors, ultrasonic sensors, and inertia measurement unit (IMU) sensors.

The first group of sensors is configured to monitor the operation and condition of personal mobility vehicle **1000,** which is required for stabilization. The conditions include the weight and the sitting position of the passenger, the tilting angle, and the tilting velocity. The vehicle stabilization mechanism includes one or more seat sensors **2102** positioned on the base frame **1202A.** In certain embodiments, the base frame **1202A** is segmented into plural sections, and each section has a separated seat sensor **2102** for determining the pressure exerted by the passenger (or goods) on such section of base frame **1202A.** The sensed pressure, the weight of the passenger (or goods), and the distribution of weight can further be processed for determining the seating position, the tilting angle, and the tilting velocity. This allows the vehicle stabilization mechanism to swiftly respond to any shift of weight and perform counter-balancing measures. In certain embodiments, the seat sensor **2102** may further include a seat belt tension sensor, a gyroscope sensor, and an accelerometer, which are used to sense the weight of the passenger **1100,** sitting position and seat belt fasten status, and the seat body **1202** tilting angle and tilting velocity.

In some aspects of the present disclosure, the personal mobility vehicle **1000** further includes a plurality of vision sensors, a plurality of light detection and ranging (LiDAR) sensors, and IMU, which are configured to sense the environment surrounding the personal mobility vehicle **1000** for exploration of the nearby ground structures and the low-lying obstacles. These sensors are essential for assisting the vehicle automated driving mechanism. In certain embodiments, the plurality of vision sensors include two front monocular cameras **5301, 5302** configured to capture the visual features in front of the personal mobility vehicle **1000.** The two front monocular cameras **5301, 5302** are positioned on the two adjustable arms **1219, 1220** extending from the two handles **1217, 1218.** The front monocular cameras **5301, 5302** may not be exactly forward-facing. Assuming that each of the front monocular cameras **5301, 5302** has a horizontal field of view (FOV) of 90 degrees and a vertical FOV of 60 degrees, by slightly rotating the direction towards the side, the two front monocular cameras **5301, 5302** can collectively cover a larger horizontal FOV.

The plurality of vision sensors further include two side monocular cameras **5305, 5306** positioned on the two handles **1217, 1218** and configured to capture the visual features of both sides of the personal mobility vehicle **1000**. Similarly, there is provided two rear monocular cameras **5303, 5304** positioned on the rear side of the personal mobility vehicle **1000** and configured to capture the visual features from the rear side. The vision sensors are configured to perform exploration of nearby ground structures and low-lying obstacles and perform object detection, recognition, and tracking. The illustrated embodiments provide six monocular cameras **5301-5306** disposed at various positions of the personal mobility vehicle 1000. For example, the side monocular cameras **5305, 5306** may alternatively be positioned on the two foldable side frames **1203** or the two armrests **1203A.** In yet another embodiment, the vision sensors may be fish-eye cameras, HD cameras, or infrared cameras.

In some aspects of the present disclosure, the plurality of LiDAR sensors include two front laser sensors **5201, 5202,** preferably LiDAR sensors, attached to the two adjustable arms **1219, 1220** extending from the two handles **1217, 1218.** Similarly, on the rear side, there is also provided a rear LiDAR sensor **5203.** The LiDAR sensors may be a 2D or 3D LiDAR sensor configured to perform object detection, mapping, and localization. Preferably, the plurality of LiDAR sensors are configured to generate a 3D point cloud map of points indicating the locations of reflective features in an environment, which is generally a mid-range detection. The reflective features provide information on the nearby ground structures and low-lying obstacles. The illustrated embodiments provide three LiDAR sensors **5201-5203** disposed at various positions of the personal mobility vehicle **1000,** it is apparent that the configuration, arrangement, and the number of LiDAR sensors may be otherwise. For example, the two front laser sensors **5201, 5202** may alternatively be positioned on the two handles **1217, 1218**.

In some aspects of the present disclosure, the personal mobility vehicle **1000** may further include one or more ultrasonic sensors. For example, there is a front ultrasonic sensor **5501** near the front footrest **1205** and a rear ultrasonic sensor **5502** at the rear side of the personal mobility vehicle **1000,** which are shown in the illustrated embodiments. The ultrasonic sensors **5501, 5502** are configured to perform short-range detection based on portions of the ultrasonic waves that are reflected from the objects in the nearby environment. The illustrated embodiments provide two ultrasonic sensors **5501, 5502** disposed at various positions of the personal mobility vehicle **1000,** it is apparent that the configuration, arrangement, and the number of ultrasonic sensors may be otherwise.

In some aspects of the present disclosure, the personal mobility vehicle **1000** may further include one or more radar sensors. For example, there is a front radar sensor **5401** near the front footrest **1205** and a rear radar sensor **5402** at the rear side of the personal mobility vehicle **1000,** which are shown in the illustrated embodiments. The radar sensors **5401, 5402** may be a short-range radar or a long-range radar. In one embodiment, the radar sensors **5401, 5402** are long-range radar configured to perform long-range detection of objects in the nearby environment by transmitting and receiving radar signals. The illustrated embodiments provide two radar sensors **5401, 5402** disposed at various positions of the personal mobility vehicle **1000,** it is apparent that the configuration, arrangement, and the number of radar sensors may be otherwise.

A part from the plurality of sensors, the personal mobility vehicle 1000 may further include a communication system **6100** configured to establish direct communication with other personal mobility vehicles that are configured to travel together as a travelling cluster. The communication system **6100** may also establish a communication link to other communication equipment for connecting to the cloud server by high speed 5G connectivity. The communication system **6100** comprises one or more devices, components, or equipment operating using one or more communication protocols selected from Bluetooth, Wireless Body Area Network (WBAN), Ethernet, and other communication protocols.

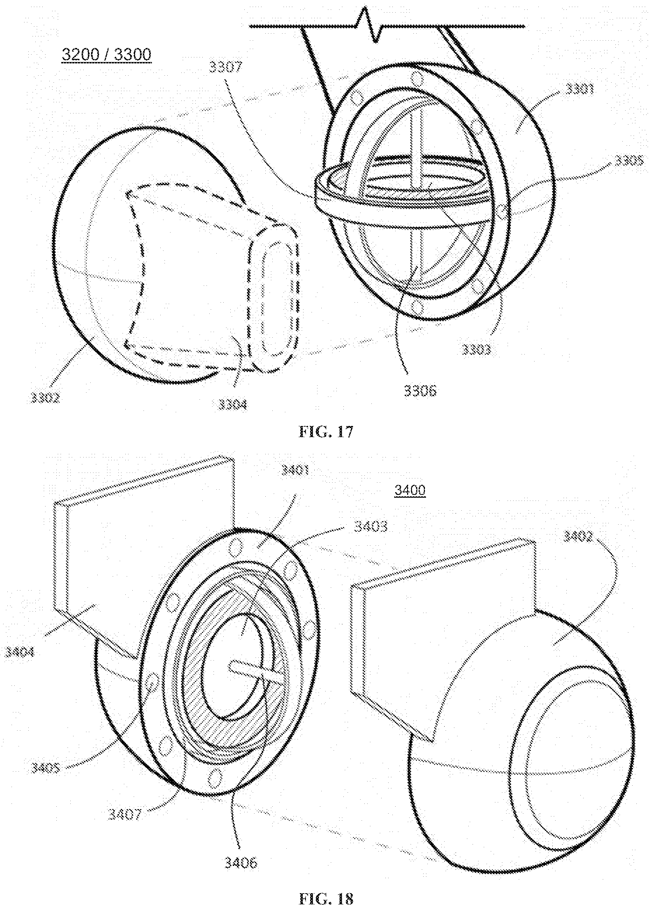

Another aspect of the present disclosure provides the structure of the flywheel assemblies. Referring to FIGS. **17-18**, the internal views of the front flywheel assembly **3200, 3300** and the rear flywheel assembly **3400** are shown. Each flywheel assembly **3200, 3300, 3400** comprises a spherical casing, a spin axis **3306, 3406,** a gimbal **3307**, **3407,** and a high-speed flywheel gyroscope **3303, 3403,** or other balancing devices. The high-speed flywheel gyroscope **3303, 3403** is a weighted fast-spinning disk that can be rotated freely and is configured to balance the personal mobility vehicle **1000** by rotating the high-speed flywheel gyroscope **3303, 3403** based on an angular momentum generated from the tilting angle and tilting velocity. Each high-speed flywheel gyroscope **3303, 3403** is enclosed within a casing **3301, 3401** and a cover **3302, 3402.** The casing **3301, 3401** and the cover **3302, 3402** are mounted together using bolts **3305, 3405** or other connectors to form the spherical casing for holding the high-speed flywheel gyroscope **3303, 3403.** On the cover **3302,** there is further provided a protrusion **3304** on the front flywheel assembly **3200, 3300** for accommodating the headlight **1208.** On the rear flywheel assembly **3400,** there is further provided one or more flags **3404** for accommodating various kinds of sensors at the rear end as discussed throughout this disclosure. The high-speed flywheel gyroscope **3303, 3403** is fixedly connected to and rotates together with the spin axis **3306, 3406.**

The second group of the sensors is used for the vehicle stabilization mechanism, wherein the vehicle stabilization mechanism comprises a plurality of gyro sensors and a plurality of triaxial accelerometers, which are arranged collectively to sense a tilting angle and a tilting velocity of the seat assembly **1202.** The plurality of gyro sensors and the plurality of triaxial accelerometers may be provided inside the flywheel assemblies **3200, 3300, 3400** of FIGS. **17-18****,** or otherwise disposed at various positions of the personal mobility vehicle **1000**.

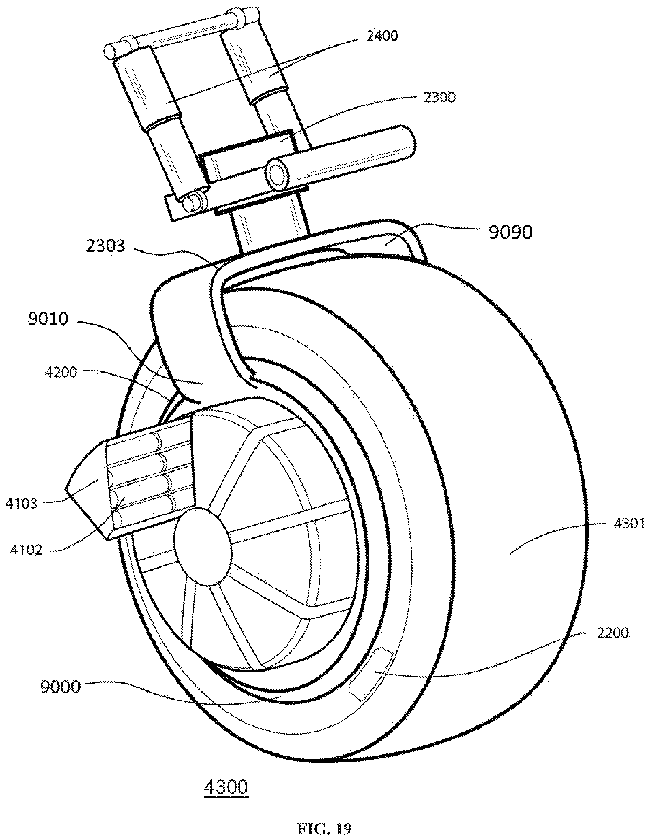

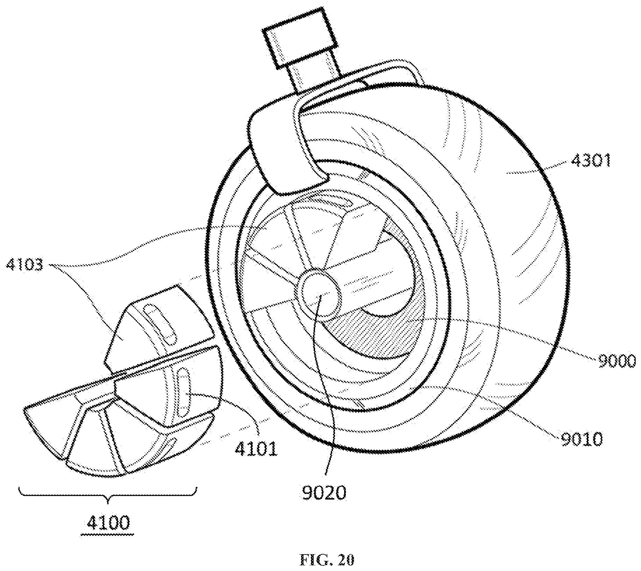

Turning now to FIGS. **19** and **20****,** the single wheel assembly **4300** is illustrated to demonstrate the advantage of being compact. The personal mobility device **1000** is electrical-powered, so power storage is essential to enable the personal mobility device **1000** to operate. The battery is usually housed separately in those conventional electrical cars and may require substantial space. This is also one of the reasons why the conventional electrical cars are not compact enough. The illustrated embodiments provide a single wheel assembly **4300** comprising an electric energy system **4100** located inside the single wheel assembly **4300.** This is possible because the electric propulsion system **4200** is compact enough to leave sufficient space for accommodating the electric energy system **4100** within the single wheel assembly **4300.** As connected from the stirrup-style steering linkage **2303,** the active suspension system **2400** and the steering system **2300** are coupled to the left wheel stator **9010** and the right wheel stator **9090** of the single wheel assembly **4300.** A brake-by-wire system **2200** is provided in the wheel assembly, which is configured to effect braking operations through an electronic control.

In the illustrated embodiments, the electric energy system **4100** comprises a plurality of power pack modules **4103** arranged circumferentially around the motor shaft **9020** of the wheel arrangement. Preferably, the power pack module **4103** is an arc-shaped power pack module. Each power pack module **4103** holds one or more battery cells **4102.** The power pack module **4103** further comprises a battery management system **4101** for controlling the charging and discharging of the one or more battery cells **4102.** When a battery cell **4102** is fully charged, the battery management system **4101** will prevent such battery cell **4102** from further charging. In certain embodiments, the one or more battery cells **4102** are selected from a group consisting of a lithium-ion battery cell, a hydrogen fuel cell, a nickel-metal hydride battery, a lead-acid battery, an ultracapacitor, or any combinations thereof.

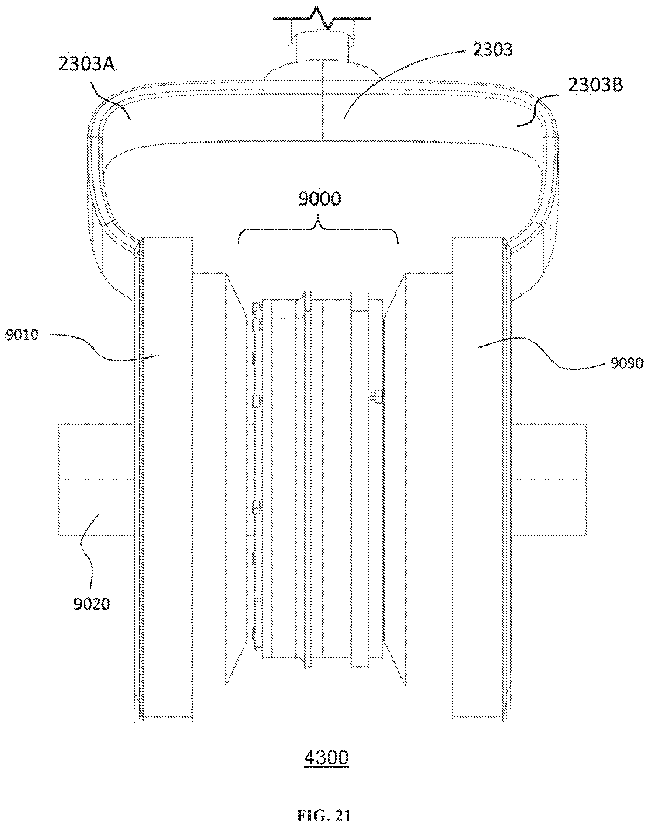

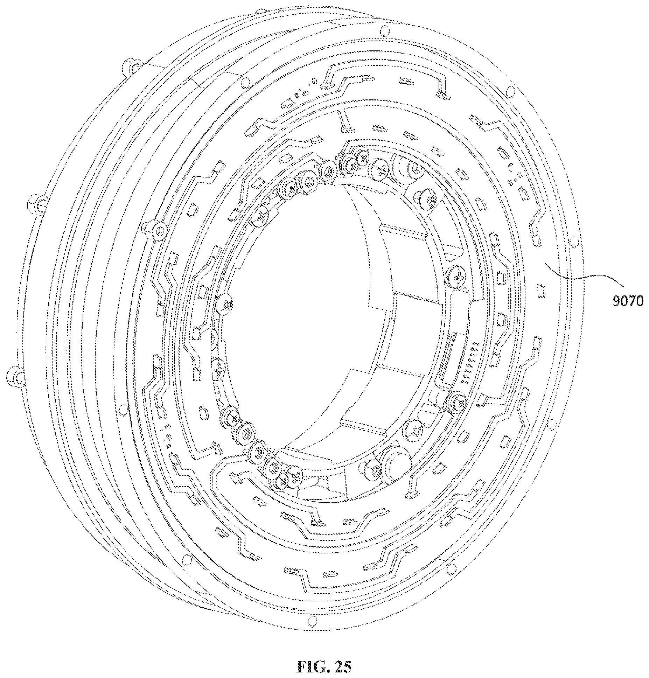

The internal structure and operation of the single wheel assembly **4300** are discussed in further detail in FIGS. **21-25****.** The single wheel assembly **4300** employs a traction motor **9000** or other direct drive rotary motors as the in-wheel motor for generating torque and rotational force to propel the personal mobility device **1000.** The traction motor **9000** of the electric propulsion system **4200** is arranged in the middle of the single wheel assembly **4300** between the left wheel stator **9010** and the right wheel stator **9090,** and is not consuming all the space inside the single wheel assembly **4300.** In FIG. **21****,** the relative position and size of the traction motor **9000** in the single wheel assembly **4300** is depicted (the wheel rim **9080** is not shown for simplicity and clarity). This also supports the integration of the power pack modules **4103** into the single wheel assembly 4300.

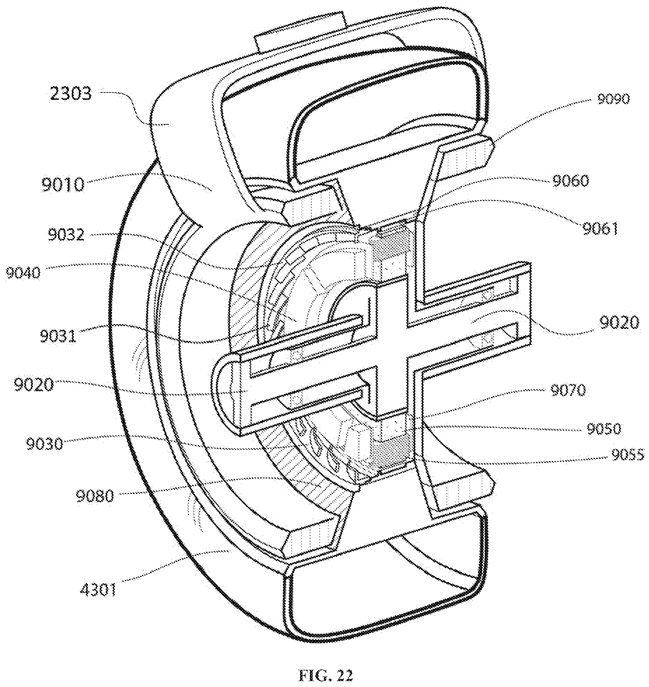

Further, as shown in FIGS. **22-23****,** the in-wheel motor is a traction motor **9000** comprising a left wheel stator **9010,** a motor shaft **9020,** a rotatable air guide structure **9030,** a motor controller printed circuit board (PCB) **9040,** a stator **9050,** a rotor **9060,** a winding connection PCB **9070,** a wheel rim **9080,** and a right wheel stator **9090.**

In certain embodiments, each of the left wheel stator **9010** and the right wheel stator **9090** includes a ring-shaped recession **9011,** which collectively provides an air-tight enclosure for the traction motor **9000.** The center protrusion **9012** extended from the ring-shaped recession **9011** is used for affixing to the motor shaft **9020.** The motor shaft **9020** is disposed across the traction motor **9000** connecting the left wheel stator **9010** and the right wheel stator **9090** as the central axis co-incident with the axis of rotation. On the ring-shaped recession **9011,** connectors are provided (not shown) for interfacing with the plurality of power pack modules **4103.** From the two ring-shaped recessions **9011,** two L-shaped arms **2303A, 2303B** are extended out from the left wheel stator **9010** and the right wheel stator **9090.** The two L-shaped arms **2303A, 2303B** collectively form the stirrup-style steering linkage **2303** for connecting to the vehicle body **1201.** In another word, the left wheel stator **9010** and the right wheel stator **9090** are used to clamp the single wheel assembly **4300** to the vehicle body **1201.**

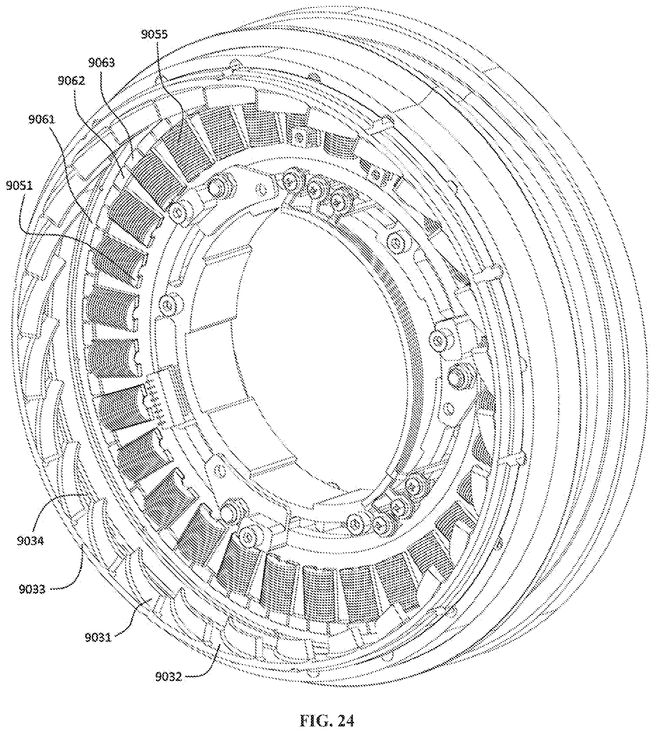

In the traction motor **9000,** the rotational force for propelling the personal mobility device **1000** is generated by magnetic force. In particular, the stator **9050** and the rotor **9060** are in magnetic interaction with each other. The rotor **9060** is mounted circumferentially outside the stator **9050** and is rotatable about the axis of rotation by a magnetic field. When the traction motor **9000** receives electric current from the electric energy system **4100,** a magnetic field is generated around and within the stator **9050.** The magnetic field of the stator **9050** interacts with the magnetic field of the rotor **9060** and sets the rotor **9060** in rotational motion around the stator **9050.** In the illustrated embodiments, the stator **9050** comprises a plurality of electro-magnets **9051** for generating a magnetic field, each electro-magnet **9051** comprises a solenoid **9055** wound around a ferro-magnetic core. On the other hand, the rotor **9060** comprises a rotor lamination **9061** and two groups of permanent magnets **9062, 9063** alternatingly attached to slots of the rotor lamination **9061,** which is better shown in FIG. **24****.** If the first group of permanent magnets **9062** is magnetized to the N pole, then the second group of permanent magnets **9063** is magnetized to the S pole. Therefore, the two groups of permanent magnets **9062, 9063** are magnetized to different polarities.

There are two PCBs provided in the traction motor **9000** for controlling the rotation. The motor controller PCB **9040** provides the main control circuity for enabling the traction motor **9000** and controlling the speed of the rotation. The winding connection PCB **9070** provides the circuity for connecting the electro-magnets **9051** of the stator **9050** so that the electro-magnets **9051** can operate in a number of predetermined phases. The design is provided with fault tolerant windings, and it is possible to execute isolation in the event of phase failure.

Surrounding the stator **9050** and the rotor **9060,** there is provided a wheel rim **9080.** The wheel rim **9080** is connected to and fitted to the rotor **9060** for transferring the rotational motion to the tyre **4301** for driving the personal mobility device **1000.** Particularly, the wheel rim **9080** has an outer circumferential rim wall **9083** for installing the tyre **4301** thereon. An opening **9082** is provided at an inner peripheral side **9081** of the wheel rim **9080** for accommodating the stator **9050** and the rotor **9060.**

In a conventional traction motor, over-heating is the most critical constraint and problem encountered, which undoubtedly limits the application of such motor type. Generally, there is a significant temperature rise when the traction motor **9000** is activated. Nonetheless, using a traction motor as an in-wheel motor may further require an air-tight configuration for preventing water ingress. Therefore, there is a problem of poor heat dissipation when no airflow across the traction motor **9000** is allowed.

In an attempt to overcome this over-heating problem, the present disclosure advantageously provides a rotatable air guide structure **9030** mounted between the wheel rim **9080** and the rotor **9060** for redistributing the temperature hotspots and dissipating the heat to the wheel rim **9080** and the surrounding. In certain embodiments, the rotatable air guide structure **9030** is mounted to the wheel rim **9080** and the rotor **9060** by welding, bolting, or the like.

As the temperature is not evenly distributed across the stator **9050** and the rotor **9060,** the rotatable air guide structure **9030** can generate airflow inside the traction motor **9000** to avoid any temperature hotspots from forming. The rotatable air guide structure **9030** is a cooling structure arranged circumferentially around the stator **9050** to rotate with the rotor **9060** about the axis of rotation. Particularly, the rotatable air guide structure **9030** is attached to the rotor **9060** so they are rotated at the same speed and in the same manner. The rotatable air guide structure **9030** can generate air circulation within the traction motor **9000** to evenly dissipate heat energy from the stator **9050.** Apart from the rotatable air guide structure **9030,** other structures for cooling the traction motor **9000** may also be include. For instance, coolant (such as water) may also be used to reduce the temperature of the stator 9050 by heat transfer.

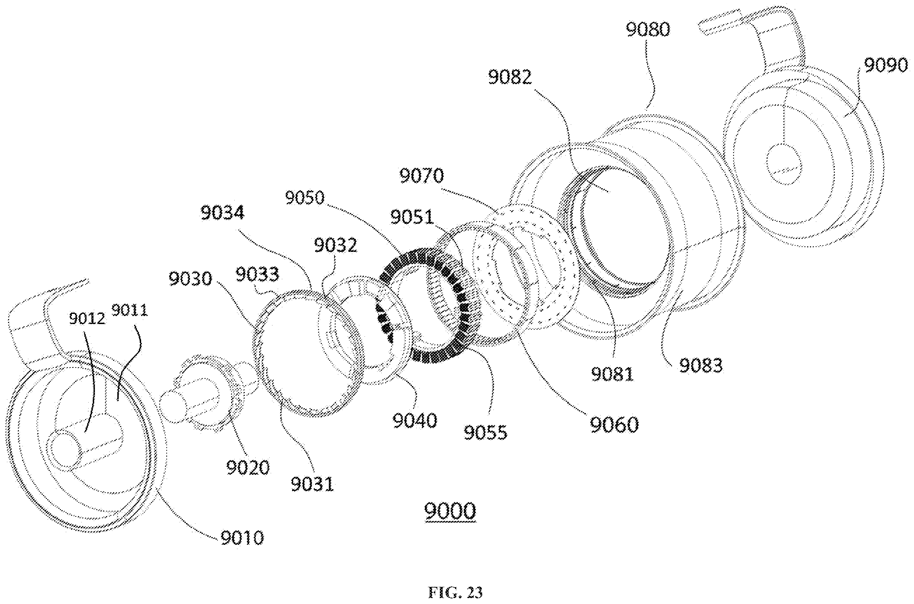

In one further aspect of the present disclosure, an exemplary structure of the rotatable air guide structure **9030** is described with the aid of FIGS. **23-24****.** The rotatable air guide structure 9030 comprises a ring body **9032** and a plurality of vanes **9031** protruded from an inner circumferential surface of the ring body **9032.** Each of the plurality of vanes **9031** extends radially from a first edge **9033** of the ring body **9032** towards a second edge **9034** of the ring body **9032.** The vane **9031** may not be a straight protrusion. Instead, the vane **9031** may be slightly curved to maximize the air circulation generated. Preferably, the plurality of vanes **9031** are integrally formed as parts of the ring body **9032.**

The traction motor **9000** of the present disclosure allows it to be used as an in-wheel motor for use in the personal mobility device **1000.** In particular, the effort in creating air circulation within the traction motor **9000** for cooling the internal components makes the application of the traction motor **9000** in a single wheel assembly **4300** possible. Other driving approaches, such as internal combustion engines, may not be possible to achieve the same performance with the same compact design.

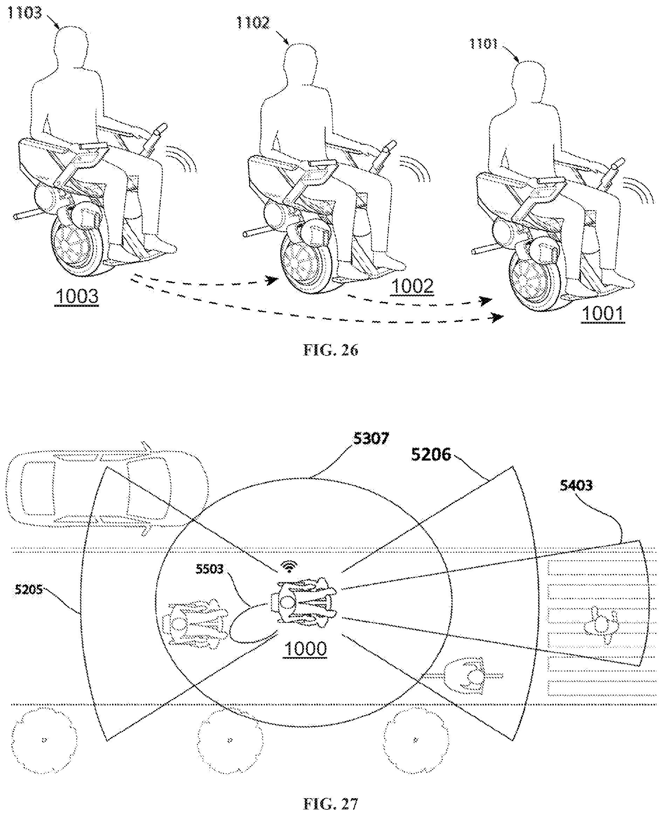

The present disclosure allows both autonomous driving and manual control of the personal mobility device **1000.** In one specific application, a number of personal mobility device **1000** may be arranged to operate together as a travelling cluster, as conceptually illustrated in FIG. **26****.** The group of personal mobility devices **1001, 1002, 1003** forms a travelling cluster. In the illustrated embodiments, all three personal mobility devices **1001, 1002, 1003** are travelling in automated driving mode for carrying three individuals **1101, 1102, 1103.** The plurality of personal mobility vehicles **1001, 1002, 1003** are in close proximity to each other and are connected wirelessly. The first personal mobility vehicle **1001** is a lead vehicle, and the other personal mobility vehicles **1002, 1003** are connected to the first personal mobility vehicle **1001** to move in synchronization autonomously. In certain cases, the other personal mobility vehicles **1002, 1003** following the first personal mobility vehicle **1001** may be arranged to carry goods. The three personal mobility devices **1001, 1002, 1003** use vehicle-to-vehicle wireless connectivity to communicate. This type of configuration is suitable for a group of people traveling together, such as a family and etc. Alternatively, the personal mobility devices **1000** can be deployed as a fleet for rent to carry goods or an individual. In the illustrated embodiment, three individuals **1101, 1102, 1103** being transported as a travelling cluster is depicted, and it is apparent that the travelling cluster may consist of a more or fewer number of individuals or goods being transported together as a travelling cluster.

Advantageously, the three personal mobility devices **1001, 1002, 1003** can maintain the speed, longitudinal and lateral distances in relative to each other. At the same time, each personal mobility device **1000** is equipped with sufficient sensors for identifying risks and obstacles associated only with that personal mobility device **1000,** thereby the personal mobility device **1000** can still response swiftly when any unexpected event is detected.

As discussed above in FIGS. **15-16****,** the personal mobility vehicle **1000** includes a plurality of sensors configured for monitoring the operation and condition of the personal mobility vehicle **1000,** and performing vehicle navigation and exploration of nearby ground structures and low-lying obstacles. With reference to the example in FIG. 27, the operation of the plurality of sensors is further described.

The ultrasonic sensors **5501, 5502** are configured to perform short-range detection **5503,** which is particularly used for detecting other vehicles travelling in the same direction or other personal mobility vehicles **1000** travelling together as a travelling cluster. The LiDAR sensors **5201-5203** are configured to perform object detection, mapping, and localization by performing mid-range detection **5205, 5206** and generating a 3D point cloud map of points of the environment. The radar sensors **5401, 5402** are configured to perform short-range or long-range detection **5403** of objects in the nearby environment by transmitting and receiving radar signals. The vision sensors are configured to perform object detection and recognition **5307** by sensing the environment surrounding the personal mobility vehicle **1000** for identifying of the nearby ground structures and the low-lying obstacles.

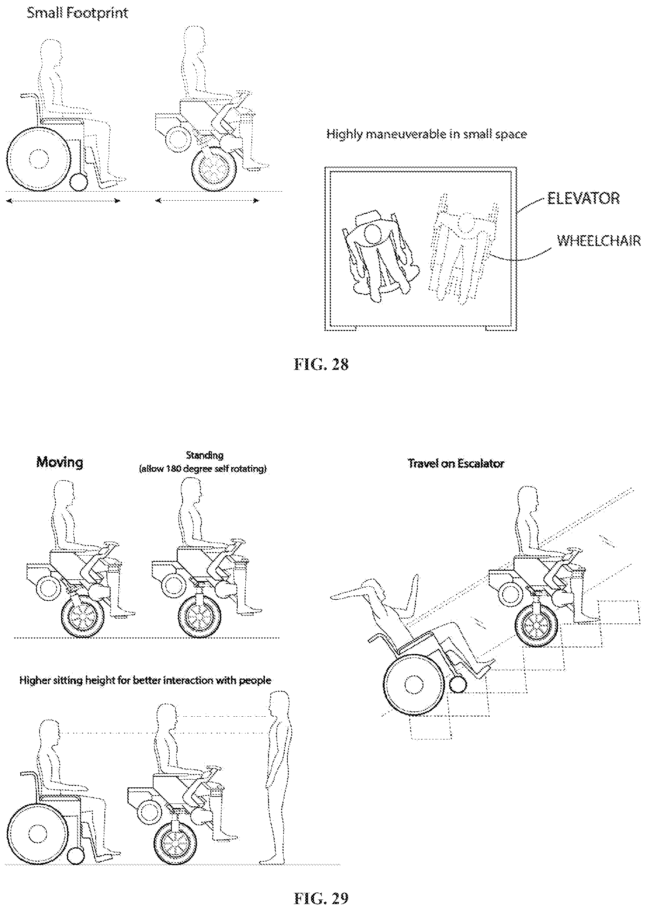

Turning now to FIG. **28****,** as the personal mobility vehicle **1000** includes a wheel arrangement comprising a single wheel assembly **4300,** the personal mobility vehicle **1000** occupies a small physical footprint with a size similar to a wheelchair. However, the wheelchair cannot compare with the present disclosure in terms of the maneuverability. The personal mobility vehicle **1000** can move into a small space, such as an elevator, and can even move around inside the small space.

FIG. **29** provides further advantages of the personal mobility vehicle **1000** of the present disclosure. The sitting height of the individual **1100** is higher than a typical wheelchair, which offers a better interaction with other people when communicating. The personal mobility vehicle **1000** can support self-rotation and can travel on an escalator with less risk. The front footrest **1205** is slightly higher than the ground, which allows the individual **1100** to travel on an escalator. Furthermore, the self-balancing units can generate gyroscopic forces to keep the personal mobility vehicle **1000** properly balanced on the escalator.

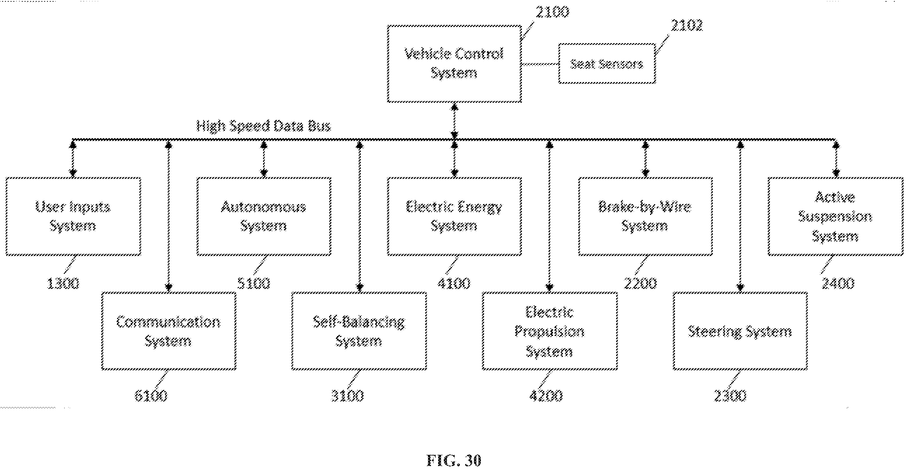

As shown in FIG. **30****,** the preferred vehicle system architecture employed in the personal mobility vehicle **1000** is shown. The personal mobility vehicle **1000** comprises a vehicle control system **2100** with seat sensors **2102** provided, a user inputs system **1300** that is communicable with the touch-screen provided in the one or more digital displays **1211, 1212,** a communication system **6100,** an autonomous system **5100, a** self-balancing system **3100,** an electric energy system **4100,** an electric propulsion system **4200,** a brake-by-wire system **2200,** a steering system **2300,** and an active suspension system **2400.** The communication between each system is carried out via one or more high-speed data buses.

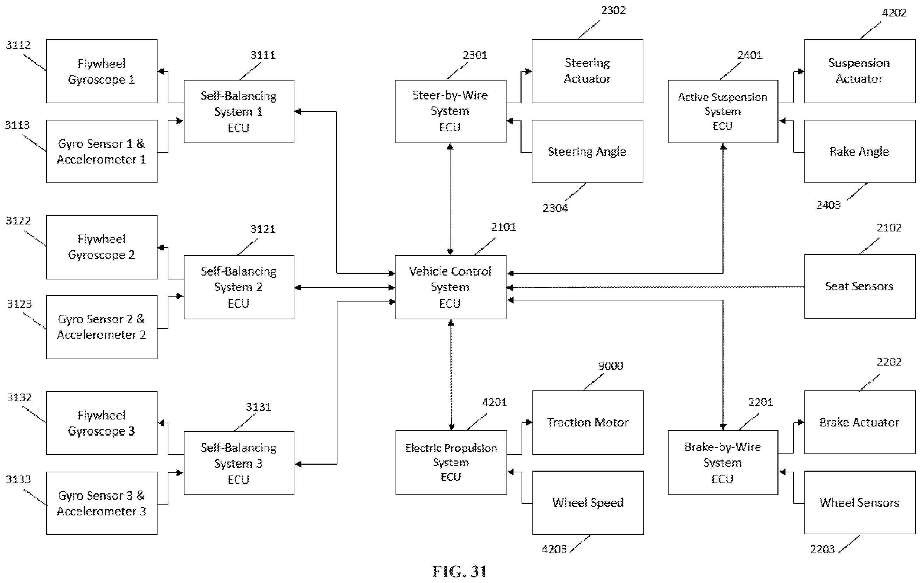

FIG. **31** depicts the vehicle stabilization mechanism of the personal mobility vehicle **1000.** As explained above, the vehicle stabilization mechanism comprises a plurality of self-balancing units to counter-balancing a tilting movement of the personal mobility vehicle **1000** for preventing tipping. From the electronic control point of view, the vehicle stabilization mechanism comprises the following electronic control units.

The vehicle control system electronic control unit (VCS ECU) **2101** comprising a processor is used as the vehicle stabilization main controller to sense the tilting of the wheel assembly **4300,** seat body **1202,** to keep the personal mobility vehicle **1000** in a self-balanced state and to prevent the seat body **1202** from over tilting. The stabilization is executed by an algorithm which computes the state of the personal mobility vehicle **1000** and automatically sets the commands to control the gyroscopic forces, wheel steering, and rake angles, wheel forward and reverse motion, and wheel braking. The purpose of the VCS ECU **2101** is to keep the seat body 1202 not tilted even when the wheel assembly **4300** is tilted.

The self-balancing units are positioned around the personal mobility vehicle **1000** at lower vertical positions below the seat body **1202** and used to generate gyroscopic forces. The self-balancing system electronic control units (SBL_ECU) **3111, 3121, 3131** are provided in communication with the VCS_ECU **2101** for balancing the personal mobility vehicle **1000,** wherein each SBL_ECU **3111, 3121, 3131** comprises a processor and an electric drive, are used to control the speed of the high speed flywheel gyroscopes in the self-balancing units. Particularly, the SBL_ECU **3111, 3121, 3131** receives sensed vehicle tilting angle and tilting velocity in X,Y, Z axles from the gyroscope sensors and accelerometers **3113, 3123, 3133.** X axle is pointing to the forward moving direction, which is defined with respect to the left and right tilting angles. Y axle is pointing to the lateral direction, which is defined with respect to the front and rear tilting angles. Z axle is pointing to the upward direction, which is defined with respect to the steering angles. Then the SBL_ECU **3111, 3121, 3131** transmit the tilting angle and tilting velocity to the three flywheel gyroscopes **3112, 3122, 3132.**

The steer-by-wire system electronic control unit (SBW ECU) **2301,** comprising a processor and an electric drive, is used to control the steering angle **2304.**

The active suspension system electronic control unit (ASP_ECU) **2401,** comprising a processor and an electric drive, is used to control the rake angle **2403.**

The electric propulsion system electronic control unit (EPP ECU) **4201,** comprising a processor and an electric drive, is used to control the forward and reverse motions.

The brake-by-wire system electronic control unit (BBW ECU) **2201,** comprising a processor and an electric drive, is used to control the brake actuator **2202** and optionally based on any wheel sensors **2203.** In certain embodiments, the wheel sensors **2203,** generally comprising a position encoder, a tyre pressure sensor, a gyroscope sensor and an accelerometer, are used to sense the tyre pressure and wheel tilting angle and tilting velocity. The wheel sensors **2203** are electrically connected to the BBW ECU **2201** and transmit the angular position, tyre pressure, wheel tilting angle, and tilting velocity to the BBW ECU **2201.**

The VCS ECU **2101,** the SBL_ECU **3111, 3121, 3131,** the SBW ECU **2301,** the ASP ECU **2401,** the EPP ECU **4201,** and the BBW_ECU **2201** are electrically connected on a common high speed data bus.

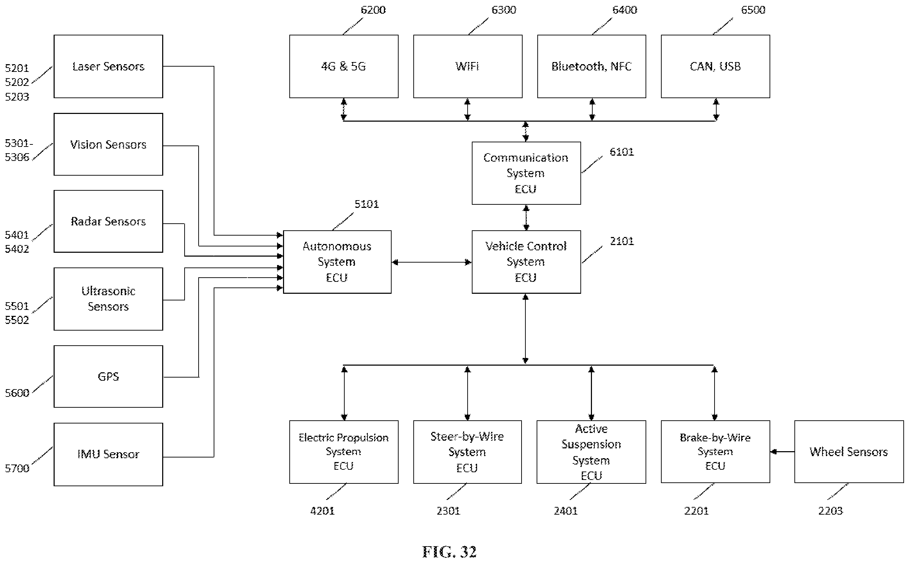

FIG. **32** provides the vehicle autonomous driving mechanism of the personal mobility vehicle **1000.** From the electronic control point of view, the vehicle automated driving mechanism comprises the following electronic control units.

The autonomous system electronic control unit (AUT_ECU) **5101,** comprising a high performance multi-core processor and a hardware accelerator, is used as the main controller to execute the sensing, sensor data fusion, perception, mapping, localization, and path planning algorithms and output the vehicle motion commands such as direction and speed to the vehicle control system.

The VCS_ECU **2101,** is used as an interface to the AUT_ECU **5101** to couple the vehicle motion commands to the self propelling system, the steer-by-wire system, the brake-by-wire system, and the active suspension systems, and position encoder data from the wheel sensor in the brake-by-wire system.

The VCS ECU **2101,** is also used as an interface to the communication system electronic control unit (COM_ECU) **6101** for handling automated driving data received wirelessly from other vehicles of the same type and enabling multiple vehicles to operate in a cluster for maintaining a safe speed, longitudinal and lateral distances in relative to one another. The wireless communication also enables the vehicle to communicate with the surrounding infrastructure during its operation.

The COM ECU **6101,** comprising a processor with a built-in wired module (such as USB and CAN) and/or wireless communication modules, is used to communicate with compatible communication equipment externally including other vehicles of the same type. The wireless communication module may be configured to support one or more communication protocols for communicating with other vehicles, the one or more communication protocols being selected from 4G and 5G connectivity **6200,** WiFi **6300,** Bluetooth, and near field communication (NFC) **6400,** controller area network (CAN) and USB **6500.**

Laser sensors **5201, 5202, 5203,** which may include 2D and 3D LiDAR sensors, are used to scan and provide a 360-degree view of the surrounding for object detection, mapping, and localization. The laser sensors **5201, 5202, 5203** are electrically connected to the AUT ECU **5101** and transmit the scanned data to the AUT ECU **5101.**

Vision sensors **5301, 5302** (front left & right), **5303, 5304** (rear left & right), **5305, 5306** (side left & right), comprising HD and thermal infrared cameras, are used for object detection, recognition and tracking. The vision sensors **5301, 5302** (front left & right), **5303, 5304** (rear left & right), **5305, 5306** (side left & right) are electrically connected to the AUT_ECU **5101** and transmit the image data to the AUT_ECU **5101.**

Radar sensors **5401, 5402** and ultrasonic sensors **5501, 5502,** are used to detect objects close to the vehicle for obstacle avoidance. The radar and ultrasonic sensors **5401, 5402, 5501,** 5502, are electrically connected to the AUT_ECU **5101** and transmit the detected objects distance and velocity data to the AUT_ECU **5101.**

The GPS sensor **5600** and the IMU sensor **5700,** are used in combination for localization at different update rate to optimize performance accuracy. The GPS **5600** and Inertia Measurement Unit (IMU) **5700** are electrically connected to the AUT_ECU **5101** and transmit the localization data to AUT_ECU **5101.**

## Claims

1. A personal mobility vehicle (1000) comprising:
a vehicle body (1201); and
a wheel arrangement having a single wheel assembly (4300) with an in-wheel motor rotatable about an axis of rotation, wherein the single wheel assembly (4300) defines a vertical plane aligned with a travel direction of the personal mobility vehicle (1000), and wherein the vertical plane is perpendicular to the axis of rotation, the in-wheel motor is a traction motor (9000) comprising:
a stator (9050) and a rotor (9060) in magnetic interaction with each other, wherein the rotor (9060) is mounted circumferentially outside the stator (9050) and is rotatable about the axis of rotation by a magnetic field;
a wheel rim (9080) connected to and fitted to the rotor (9060) and having an outer circumferential rim wall (9083) for installing a tyre (4301), wherein an opening (9082) is provided at an inner peripheral side (9081) of the wheel rim (9080) for accommodating the stator (9050) and the rotor (9060); and **characterised in that**
a rotatable air guide structure (9030) mounted between the wheel rim (9080) and the rotor (9060), which is arranged circumferentially around the stator (9050) to rotate with the rotor (9060) about the axis of rotation for generating air circulation within the traction motor (9000) to evenly dissipate heat energy from the stator (9050); wherein the rotatable air guide structure (9030) is a cooling structure comprising a ring body (9032) and a plurality of vanes (9031) protruded from an inner circumferential surface of the ring body (9032), wherein the vane (9031) extends radially from a first edge (9033) of the ring body (9032) towards a second edge (9034) of the ring body (9032).

2. The personal mobility vehicle (1000) of claim 1, wherein the stator (9010) comprises a plurality of electro-magnets (9051) for generating the magnetic field, and wherein the rotor (9060) comprises a rotor lamination (9061) and two groups of permanent magnets (9062), (9063) alternatingly attached to slots of the rotor lamination (9061), wherein the two groups of permanent magnets (9062, 9063) are magnetized to different polarities.

3. The personal mobility vehicle (1000) of claim 1, wherein the plurality of vanes (9031) are integrally formed as parts of the ring body (9032), and the rotatable air guide structure (9030) is mounted to the wheel rim (9080) and the rotor (9060) by welding, bolting, or the like.

4. The personal mobility vehicle (1000) of claim 1 further comprises an electric energy system (4100) having a plurality of power pack modules (4103) integrated into the single wheel assembly (4300), and wherein the power pack module (4103) holds one or more battery cells (4102).

5. The personal mobility vehicle (1000) of claim 4, wherein the power pack module (4103) comprises a battery management system for controlling charging and discharging of the one or more battery cells (4102).

6. The personal mobility vehicle (1000) of claim 4, wherein the one or more battery cells (4102) are selected from a group consisting of a lithium-ion battery cell, a hydrogen fuel cell, a nickel-metal hydride battery, a lead-acid battery, an ultracapacitor, or any combinations thereof.

7. The personal mobility vehicle (1000) of claim 4, wherein the traction motor (9000) further comprises a left wheel stator (9010) and a right wheel stator (9090), which collectively provides an air-tight enclosure for the traction motor (9000), and interfaces with the plurality of power pack modules (4103).

8. The personal mobility vehicle (1000) of claim 7, wherein the left wheel stator (9010) and the right wheel stator (9090) are used to clamp the single wheel assembly (4300) to the vehicle body (1201), and wherein the vehicle body (1201) is coupled to a stirrup-style steering linkage (2303) extended from the left wheel stator (9010) and the right wheel stator (9090).

9. The personal mobility vehicle (1000) of claim 1, wherein the single wheel assembly (4300) comprises a brake-by-wire system (2200) configured to effect braking operations through an electronic control (2201).

10. The personal mobility vehicle (1000) of claim 1 **characterized in that** the personal mobility vehicle (1000) has a high degree of maneuverability, the personal mobility vehicle (1000) further comprising:
an active suspension system (2400) adjustable to change the personal mobility vehicle (1000) between a highly maneuverable state and a travelling state; and
a steering system (2300);
wherein:
the vehicle body (1201) comprises a seat assembly (1202) for carrying a passenger (1100) or goods, wherein the seat assembly (1202) defines a longitudinal axis extending from a rear end to a front end of the seat assembly (1202);
the single wheel assembly (4300) is positioned under the seat assembly (1202) via the active suspension system (2400) and the steering system (2300);
the wheel arrangement is operable to perform a forward or a backward movement;
the steering system (2300) is configured to rotate the wheel arrangement by a steering angle (2304) from the longitudinal axis, and the active suspension system (2400) is configured to adjust a rake angle (2403) between the wheel arrangement and the seat assembly (1202);
in the highly maneuverable state, the rake angle (2403) is adjusted to 0 degrees for enabling the personal mobility vehicle (1000) to perform a self-rotation or a sideways movement; and
in the travelling state, the rake angle (2403) is adjusted to a positive value for enabling the personal mobility vehicle (1000) to move forward or backward and to make turns.

11. The personal mobility vehicle (1000) of claim 10, wherein the active suspension system (2400) comprises a pair of suspension cylinders (2402), wherein the pair of suspension cylinders (2402) are actuated to adjust the rake angle (2403) of the wheel arrangement and absorb shocks and vibrations, and preferably the pair of suspension cylinders (2402) are spaced laterally and equally on two sides of the steering system (2300) and are connected to a bottom side of the seat assembly (1202).

12. The personal mobility vehicle (1000) of claim 10, wherein the steering system (2300) comprises a steering actuator (2302) for generating a steering torque on the wheel arrangement to rotate the wheel arrangement by the steering angle (2304), and preferably the steering actuator (2302) is connected to the wheel arrangement via a stirrup-style steering linkage (2303) to rotate the wheel rim (9080) by the steering angle (2304).

13. The personal mobility vehicle (1000) of claim 10, wherein the rake angle (2403) is in a range between 5 degrees and 45 degrees in the travelling state.

14. The personal mobility vehicle (1000) of claim 10, wherein the steering system (2300) is a steer-by-wire steering system.

15. The personal mobility vehicle (1000) of claim 10, wherein the personal mobility vehicle (1000) is moveable with the sideways movement after adjusting the rake angle (2403) to 0 degrees and rotating the steering angle (2304) to 90 degrees.

## Patentansprüche

1. Ein Fahrzeug (1000) für persönliche Mobilität, das Folgendes umfasst:
einen Fahrzeugkörper (1201) und
einen Radaufbau, der einen Einzelradaufbau (4300) mit in dem Rad eingebauten Motor hat, drehbar um eine Drehachse,
wobei der Einzelradaufbau (4300) eine vertikale Ebene bestimmt, ausgerichtet mit einer Bewegungsrichtung des Fahrzeugs (1000) für persönliche Mobilität und wobei die vertikale Ebene senkrecht zur Drehachse ist;
der in das Rad eingebaute Motor ist ein Fahrmotor (9000), der Folgendes umfasst:
einen Stator (9050) und einen Rotor (9060) in magnetischer Interaktion miteinander,
wobei der Rotor (9060) in Umfangsrichtung außerhalb des Stators (9050) montiert und
durch ein Magnetfeld um die Drehachse drehbar ist;
eine Felge (9080), verbunden mit dem Rotor (9060) und auf ihn aufgesetzt, die eine äußere Umfangsfelgenwand (9083) zum Anbringen eines Reifens (4301) hat, wobei eine Öffnung (9082) an einer peripheren Innenseite (9081) der Felge (9080) zum Aufnehmen des Stators (9050) und des Rotors (9060) angebracht ist; und **gekennzeichnet durch**
eine drehbare Luftleitstruktur (9030), montiert zwischen der Felge (9080) und dem Rotor (9060), die in Umfangsrichtung um den Stator (9050) angeordnet ist, um sich mit dem Rotor (9060) um die Drehachse zu drehen, um für Luftzirkulation innerhalb des Fahrmotors (9000) zu sorgen, um Wärmeenergie gleichmäßig vom Stator (9050) zu verteilen;
wobei die drehbare Luftleitstruktur (9030) eine Kühlstruktur ist, die einen Ringkörper (9032) und eine Vielzahl von Schaufeln (9031) umfasst, welche von einer inneren Umfangsoberfläche des Ringkörpers (9032) vorstehen,
wobei die Schaufel (9031) sich radial von einem ersten Rand des Ringkörpers (9032) zu einem zweiten Rand (9034) des Ringkörpers (9032) erstreckt.

2. Das Fahrzeug (1000) für persönliche Mobilität gemäß Anspruch 1, wobei der Stator (9010) eine Vielzahl von Elektromagneten (9051) zur Erzeugung des Magnetfelds umfasst und wobei der Rotor (9060) ein Läuferblech (9061) und zwei Gruppen von Dauermagneten (9062), (9063) umfasst, wobei die zwei Gruppen von Dauermagneten (9062, 9063) auf verschiedene Polaritäten magnetisiert sind.

3. Das Fahrzeug (1000) für persönliche Mobilität gemäß Anspruch 1, wobei die Vielzahl von Schaufeln (9031) integral als Teile des Ringkörpers (9032) geformt sind und die drehbare Luftleitstruktur (9030) an der Felge (9080) und dem Rotor (9060) durch Schweißen, Verschraubung oder dergleichen befestigt ist.

4. Das Fahrzeug (1000) für persönliche Mobilität gemäß Anspruch 1 umfasst weiter ein Stromsystem mit einer Vielzahl von Netzteilmodulen (4103), die in den Einzelradaufbau (4300) integriert sind, wobei das Netzteilmodul (4103) eine oder mehrere Batteriezellen (4102) enthält.

5. Das Fahrzeug (1000) für persönliche Mobilität gemäß Anspruch 4, wobei das Netzteilmodul (4103) ein Batterieverwaltungssystem zur Steuerung der Ladung und Entladung der einen oder mehreren Batteriezellen (4102) umfasst.

6. Das Fahrzeug (1000) für persönliche Mobilität gemäß Anspruch 4, wobei die einen oder mehreren Batteriezellen (4102) gewählt sind aus einer Gruppe, die aus einer Lithiumionen-Batteriezelle, einer Wasserstoffzelle, einer Nickel-Metallhydridbatterie, einem Bleiakkumulator, einem Ultrakondensator oder beliebigen Kombinationen davon besteht.

7. Das Fahrzeug (1000) für persönliche Mobilität gemäß Anspruch 4, worin der Fahrmotor (9000) weiter einen linken Radstator (9010) und einen rechten Radstator (9090) umfasst, die gemeinsam ein luftdichtes Gehäuse für den Fahrmotor (9000) bilden und mit der Vielzahl von Netzteilmodulen (4103) in Verbindung stehen.

8. Das Fahrzeug (1000) für persönliche Mobilität gemäß Anspruch 7, worin der linke Radstator (9010) und der rechte Radstator (9000) verwendet werden, um den Einzelradaufbau (4300) am Fahrzeugkörper (1201) festzuklemmen, und worin der Fahrzeugkörper (1201) mit einer bügelartigen Lenkverbindung (2303) gekoppelt ist, die sich vom linken Radstator (9010) und vom rechten Radstator (9090) erstreckt.

9. Das Fahrzeug (1000) für persönliche Mobilität gemäß Anspruch 1, worin der Einzelradaufbau (4300) ein Bremsseilsystem (2200) umfasst, ausgebildet, um Bremsvorgänge über eine elektronische Steuerung (2201) durchzuführen.

10. Das Fahrzeug (1000) für persönliche Mobilität gemäß Anspruch 1, **dadurch gekennzeichnet, dass** das Fahrzeug (1000) für persönliche Mobilität einen hohen Grad an Manövrierbarkeit hat, wobei das Fahrzeug (1000) für persönliche Mobilität weiter Folgendes umfasst:
ein aktives Aufhängungssystem (2400), verstellbar, um das Fahrzeug (1000) für persönliche Mobilität zwischen einem hochgradig manövrierbaren Zustand und einem Bewegungszustand zu verstellen, und
ein Lenksystem (2300),
worin
der Fahrzeugkörper (1201) einen Sitzaufbau (1202) zum Aufnehmen eines Passagiers (1100) oder von Gegenständen umfasst, wobei der Sitzaufbau (1202) eine Längsachse bestimmt, die sich von einem hinteren Ende zu einem vorderen Ende des Sitzaufbaus (1202) erstreckt;
der Einzelradaufbau (4300) über das aktive Aufhängungssystem (2400) und das Lenksystem (2300) unter dem Sitzaufbau (1202) positioniert wird;
der Radaufbau bedienbar ist, um eine Vorwärts- oder eine Rückwärtsbewegung durchzuführen;
das Lenksystem (2300) ausgebildet ist, um den Radaufbau von der Längsachse in einem Lenkwinkel (2304) zu drehen, und das aktive Aufhängungssystem (2400) ausgebildet ist, um einen Neigungswinkel (2403) zwischen dem Radaufbau und dem Sitzaufbau (1202) einzustellen;
im hochgradig manövrierbaren Zustand der Neigungswinkel (2403) auf 0 Grad eingestellt wird, um es dem Fahrzeug (1000) für persönliche Mobilität zu ermöglichen, eine selbsttätige Drehung oder eine seitliche Bewegung durchzuführen, und
im Bewegungszustand der Neigungswinkel (2403) auf einen positiven Wert eingestellt wird, um es dem Fahrzeug (1000) für persönliche Mobilität zu ermöglichen, sich vorwärts oder rückwärtszubewegen und Drehungen durchzuführen.

11. Das Fahrzeug (1000) für persönliche Mobilität gemäß Anspruch 10, worin das aktive Aufhängungssystem (2400) ein Paar von Federungszylindern (2402) umfasst, wobei das Paar von Federungszylindern (2402) betätigt wird, um den Neigungswinkel (2403) des Radaufbaus zu verstellen und Stöße und Schwingungen zu absorbieren, und das Paar von Federungszylindern (2402) seitlich gleichmäßig auf beiden Seiten des Lenksystems (2300) beabstandet und mit einer Unterseite des Sitzaufbaus (1202) verbunden sind.

12. Das Fahrzeug (1000) für persönliche Mobilität gemäß Anspruch 10, wobei das Lenksystem (2300) einen Lenkaktuator (2302) zum Erzeugen eines Lenkmoments an dem Radaufbau umfasst, um den Radaufbau um den Lenkwinkel (2304) zu drehen, und der Lenkaktuator (2302) vorzugsweise mit dem Radaufbau über eine bügelartige Lenkverbindung (2303) verbunden ist, um die Felge (9080) um den Lenkwinkel (2304) zu drehen.

13. Das Fahrzeug (1000) für persönliche Mobilität gemäß Anspruch 10, worin der Neigungswinkel (2403) im Bewegungszustand in einem Bereich zwischen 5 Grad und 45 Grad liegt.

14. Das Fahrzeug (1000) für persönliche Mobilität gemäß Anspruch 10, worin das Lenksystem (2300) ein Steer-by-Wire-Lenksystem ist.

15. Das Fahrzeug (1000) für persönliche Mobilität gemäß Anspruch 10, wobei das Fahrzeug (1000) für persönliche Mobilität in der Seitwärtsbewegung beweglich ist nach Einstellung des Neigungswinkels (2403) auf 0 Grad und Drehung des Lenkwinkels (2304) um 90 Grad.

## Revendications

1. Véhicule de mobilité personnelle (1000) comprenant:
un corps de véhicule (1201); et
un agencement de roues comportant un ensemble de roue unique (4300) avec un moteur intégré à la roue pouvant tourner autour d'un axe de rotation, dans lequel l'ensemble de roue unique (4300) définit un plan vertical aligné avec une direction de déplacement du véhicule de mobilité personnelle (1000), et dans lequel le plan vertical est perpendiculaire à l'axe de rotation,
le moteur intégré à la roue est un moteur de traction (9000) comprenant un stator (9050) et un rotor (9060) en interaction magnétique l'un avec l'autre,
où le rotor (9060) est monté circonférentiellement à l'extérieur du stator (9050) et peut tourner autour de l'axe de rotation sous l'effet d'un champ magnétique;
une jante (9080) reliée au rotor (9060) et montée sur celui-ci, et comportant une paroi périphérique extérieure (9083) destinée à recevoir un pneu (4301), où une ouverture (9082) est prévue sur un côté périphérique intérieur (9081) de la jante (9080) pour loger le stator (9050) et le rotor (9060); et **caractérisé en ce que**
une structure de guidage d'air rotative (9030) est montée entre la jante (9080) et le rotor (9060), qui est disposée circonférentiellement autour du stator (9050) pour tourner avec le rotor (9060) autour de l'axe de rotation afin de générer une circulation d'air à l'intérieur du moteur de traction (9000) pour dissiper uniformément l'énergie thermique provenant du stator (9050);
où la structure de guidage d'air rotative (9030) est une structure de refroidissement comprenant un corps annulaire (9032) et une pluralité d'ailettes (9031) faisant saillie à partir d'une surface circonférentielle intérieure du corps annulaire (9032), dans lequel l'ailette (9031) s'étend radialement à partir d'un premier bord (9033) du corps annulaire (9032) vers un deuxième bord (9034) du corps annulaire (9032).

2. Le véhicule de mobilité personnelle (1000) selon la revendication 1, dans lequel le stator (9010) comprend une pluralité d'électroaimants (9051) pour générer le champ magnétique, et dans lequel le rotor (9060) comprend un empilement de rotor (9061) et deux groupes d'aimants permanents (9062), (9063) fixés en alternance à des fentes de l'empilement de rotor (9061), les deux groupes d'aimants permanents (9062, 9063) étant magnétisés selon des polarités différentes.

3. Le véhicule de mobilité personnelle (1000) selon la revendication 1, dans lequel la pluralité d'ailettes (9031) sont formées d'un seul tenant en tant que parties du corps annulaire (9032), et la structure de guidage d'air rotative (9030) est montée sur la jante (9080) et le rotor (9060) par soudage, boulonnage ou similaire.

4. Le véhicule de mobilité personnelle (1000) selon la revendication 1, comprenant en outre un système d'énergie électrique (4100) comportant une pluralité de modules d'alimentation (4103) intégrés dans l'ensemble de roue unique (4300), où le module d'alimentation (4103) contient une ou plusieurs cellules de batterie (4102).

5. Le véhicule de mobilité personnelle (1000) selon la revendication 4, dans lequel le module d'alimentation (4103) comprend un système de gestion de batterie pour contrôler la charge et la décharge de la ou des cellules de batterie (4102).

6. Véhicule de mobilité personnelle (1000) selon la revendication 4, dans lequel la ou les cellules de batterie (4102) sont choisies parmi un groupe comprenant une cellule de batterie lithium-ion, une pile à combustible à hydrogène, une batterie nickel-métal hydrure, une batterie au plomb, un supercondensateur ou toute combinaison de ceux-ci.

7. Véhicule de mobilité personnelle (1000) selon la revendication 4, dans lequel le moteur de traction (9000) comprend en outre un stator de roue gauche (9010) et un stator de roue droit (9090), qui fournissent collectivement une enceinte étanche à l'air pour le moteur de traction (9000) et s'interfacent avec la pluralité de modules d'alimentation (4103).

8. Véhicule de mobilité personnelle (1000) selon la revendication 7, dans lequel le stator de roue gauche (9010) et le stator de roue droit (9090) sont utilisés pour fixer l'ensemble de roue unique (4300) à la carrosserie du véhicule (1201), et dans lequel le corps du véhicule (1201) est couplé à une tringlerie de direction de type étrier (2303) s'étendant depuis le stator de roue gauche (9010) et le stator de roue droit (9090).

9. Véhicule de mobilité personnelle (1000) selon la revendication 1, dans lequel l'ensemble de roue unique (4300) comprend un système de freinage par câble (2200) configuré pour effectuer des opérations de freinage par le biais d'une commande électronique (2201).

10. Véhicule de mobilité personnelle (1000) selon la revendication 1, **caractérisé en ce que** le véhicule de mobilité personnelle (1000) présente un haut degré de maniabilité, le véhicule de mobilité personnelle (1000) comprenant en outre:
un système de suspension active (2400) réglable pour faire passer le véhicule de mobilité personnelle (1000) d'un état hautement manœuvrable à un état de déplacement; et
un système de direction (2300);
où:
le corps du véhicule (1201) comprend un ensemble de siège (1202) destiné à transporter un passager (1100) ou des marchandises,
dans lequel l'ensemble de siège (1202) définit un axe longitudinal s'étendant d'une extrémité arrière à une extrémité avant de l'ensemble de siège (1202);
l'ensemble de roue unique (4300) est positionné sous l'ensemble de siège (1202) via le système de suspension active (2400) et le système de direction (2300);
l'agencement de roues est actionnable pour effectuer un mouvement vers l'avant ou vers l'arrière;
le système de direction (2300) est configuré pour faire tourner l'agencement de roues d'un angle de braquage (2304) par rapport à l'axe longitudinal, et le système de suspension active (2400) est configuré pour ajuster un angle d'inclinaison (2403) entre l'agencement de roues et l'ensemble de siège (1202);
dans l'état hautement manœuvrable, l'angle d'inclinaison (2403) est réglé à 0 degré pour permettre au véhicule de mobilité personnelle (1000) d'effectuer une rotation sur lui-même ou un mouvement latéral; et
dans l'état de déplacement, l'angle d'inclinaison (2403) est réglé à une valeur positive pour permettre au véhicule de mobilité personnelle (1000) d'avancer ou de reculer et de tourner.

11. Véhicule de mobilité personnelle (1000) selon la revendication 10, dans lequel le système de suspension active (2400) comprend une paire de vérins de suspension (2402), dans lequel la paire de vérins de suspension (2402) est actionnée pour ajuster l'angle d'inclinaison (2403) de la disposition des roues et d'absorber les chocs et les vibrations, et de préférence la paire de vérins de suspension (2402) est espacée latéralement et de manière égale sur les deux côtés du système de direction (2300) et est reliée à une face inférieure de l'ensemble de siège (1202).

12. Véhicule de mobilité personnelle (1000) selon la revendication 10, dans lequel le système de direction (2300) comprend un actionneur de direction (2302) pour générer un couple de direction sur l'agencement de roues afin de faire tourner l'agencement de roues selon l'angle de braquage (2304), et de préférence, l'actionneur de direction (2302) est relié à l'agencement de roues via une tringlerie de direction de type étrier (2303) pour faire tourner la jante (9080) selon l'angle de braquage (2304).

13. Véhicule de mobilité personnelle (1000) selon la revendication 10, dans lequel l'angle d'inclinaison (2403) est compris entre 5 degrés et 45 degrés en état de déplacement.

14. Véhicule de mobilité personnelle (1000) selon la revendication 10, dans lequel le système de direction (2300) est un système de direction à commande électrique.

15. Véhicule de mobilité personnelle (1000) selon la revendication 10, dans lequel le véhicule de mobilité personnelle (1000) est mobile avec le mouvement latéral après avoir réglé l'angle d'inclinaison (2403) à 0 degré et tourné l'angle de braquage (2304) à 90 degrés.
